# EUROPEAN PATENT SPECIFICATION

(11) **EP 4 645 005 B1**
(45) Date of publication and mention of the grant of the patent: **19.08.2026**
(21) Application number: 25172775.6
(22) Date of filing: 28.04.2025
(51) Int. Cl.: G05B 13/02, F24F 11/62, G05B 13/04

(54) **THERMAL OPTIMIZATION AND CONTROL IN OPEN-PLAN SPACES USING PHYSICS-INFORMED GRAPH NEURAL NETWORK BASED OPTIMAL CONTROLLER**
THERMISCHE OPTIMIERUNG UND STEUERUNG IN RÄUMEN MIT OFFENEM PLAN UNTER VERWENDUNG EINER AUF PHYSIK-INFORMIERTEM NEURONALEM GRAPHNETZWERK BASIERENDEN OPTIMALEN STEUERUNG
OPTIMISATION THERMIQUE ET COMMANDE DANS DES ESPACES À PLAN OUVERT À L'AIDE D'UN CONTRÔLEUR OPTIMAL BASÉ SUR UN RÉSEAU NEURONAL GRAPHIQUE À IMPLICATION PHYSIQUE

(30) Priority: 02.05.2024 IN 202421035003
(43) Date of publication of application: 05.11.2025
(73) Proprietor: Tata Consultancy Services Limited, Maharashtra (IN)
(72) Inventor: NAGARATHINAM, Srinarayana, 600113 Chennai, Tamil Nadu (IN); VASAN, Arunchandar, 600113 Chennai, Tamil Nadu (IN)
(74) Representative: Goddar, Heinz J.

(56) References cited:
- NAGARATHINAM SRINARAYANA ET AL: "PACMAN physics-aware control MANager for HVAC", PROCEEDINGS OF THE 21ST ACM WORKSHOP ON HOT TOPICS IN NETWORKS, ACMPUB27, NEW YORK, NY, USA, 9 November 2022 (2022-11-09), pages 11 - 20, XP058971576, ISBN: 978-1-4503-9887-9, DOI: 10.1145/3563357.3564052
- VALENCIA ANGEL J ET AL: "Deformation Modeling for the Robotic Manipulation of 3D Elastic Objects using Physics-Informed Graph Neural Networks", 2023 20TH CONFERENCE ON ROBOTS AND VISION (CRV), IEEE, 6 June 2023 (2023-06-06), pages 194 - 201, XP034412612, DOI: 10.1109/CRV60082.2023.00032
- XINQI ZHANG ET AL: "Hydrogen jet diffusion modeling by using physics-informed graph neural network and sparsely-distributed sensor data", ARXIV.ORG, CORNELL UNIVERSITY LIBRARY, 201 OLIN LIBRARY CORNELL UNIVERSITY ITHACA, NY 14853, 24 August 2023 (2023-08-24), XP091599022

## Description

### CROSS-REFERENCE TO RELATED APPLICATIONS AND PRIORITY

The present application claims priority to Indian application no. 202421035003, filed on May 02, 2024.

### TECHNICAL FIELD

The disclosure herein generally relates to the field of thermal optimization and control, and, more particularly, to thermal optimization and control in open-plan spaces using physics-informed graph neural network based optimal controller.

### BACKGROUND

Optimal control of multiple heating, ventilation, and air-conditioning units in an open-plan space demands fast and accurate thermodynamic modeling. The primary environmental factors affecting user thermal comfort are air temperature, mean Radiant Temperature, and air humidity ratio. Spatial variations in these states become significant in open-plan rooms. Numerous studies aim to optimize energy use and enhance thermal comfort in building spaces. A few techniques exist for modeling spatial variation of thermal states in a building room, including computational fluid dynamics (CFD), a well-mixed single lumped node, and a multi-lumped node without partitions. Additionally, the optimization of HVAC control has been explored through thermal models of varying complexities. While computational fluid dynamics is precise, it is computationally impractical for real-time control. Therefore, lumped thermal models are used for dynamic state estimation in buildings. The lumped thermal models divide a room into cells and explicitly model inter-cell air-mixing. Optimal HVAC control has been extensively explored in single lumped-node setups, considering strategies for occupancy and ventilation. These studies assume well-mixed (or spatially uniform) thermal states in the room. Studies using multiple lumped nodes without partitions demonstrate improved performance indices. However, these studies often neglect explicit modeling of wall and window surface temperatures in control. Additionally, the computation time per control time-step involving multiple actuators has not been thoroughly examined.

Studies on thermal model development fall into three main categories: white-box, black-box, and grey-box models. White-box models require a thorough understanding of system behavior, assuming determinism, but tuning for uncertainties is complex and time-consuming. Integrating them with real-time control systems can be challenging and costly. Black-box models, utilizing statistical and neural-network techniques do not require domain knowledge but rely heavily on data and may not generalize well. They can produce unphysical results and compromising predictive control. Grey-box models, like the widely used resistance-capacitance (RC) representation, leverage prior knowledge and data for system dynamics calibration. However, the complexity of solving the coupled differential equations in real-time poses challenges for optimal control. Contemporary neural network-based techniques for dynamical state estimation include physics-informed neural networks (PINNs) and neural-ordinary differential equation (ODE). In PINNs, derivatives in governing differential equations are estimated through automatic differentiation, and the resulting residuals are added to loss function. Neural-ODE estimates state variable derivatives using forward pass of a deep neural network, incorporating it into a traditional ODE solver. However, a notable drawback is the challenge in accommodating time-dependent exogenous and control inputs, requiring a known functional form beforehand. Existing approaches often involve intricate neural network structures, making hyper-parameter tuning cumbersome. PINNs prove valuable in addressing problems related to physics, particularly those requiring robust model interpretability or explainability. Nevertheless, they exhibit limitations in scalability when the computation domain involves numerous nodes, and node states are affected by neighboring nodes.

NAGARATHINAM SRINARAYANA ET AL: "PACMAN physics-aware control MANager for HVAC", PROCEEDINGS OF THE 21ST ACM WORKSHOP ON HOT TOPICS IN NETWORKS, ACMPUB27, NEW YORK, NY, USA, 9 November 2022 (2022-11-09), pages 11-20, DOI: 10.1145/3563357.3564052, discloses a model predictive control which uses Physics-Informed Neural Network based thermal models to estimate humidity and wall temperature in addition to air temperature, wherein the thermal model treats the thermal parameters to be homogenous in the entire room.

### SUMMARY

Embodiments of the present disclosure present technological improvements as solutions to one or more of the above-mentioned technical problems recognized by the inventors in conventional systems. For example, in one embodiment, a processor implemented method is provided. The processor implemented method, comprising: obtaining, via one or more hardware processors, a time series data pertaining to one or more cooling units in an open-plan space as input, wherein the time series data comprises information on a plurality of exogeneous variables, one or more dependency-based parameters, and an associated control signal; splitting, via the one or more hardware processors, the time series data over a plurality of time slots, wherein time is reset to zero at beginning of each of the plurality of time slots, and the plurality of exogeneous variables, an initial value of the one or more variables and the associated control signal are constants in each of the plurality of time slots; generating, via the one or more hardware processors, a thermal model based on a Physics Informed-Graph Neural Network (PI-GNN) using the time series data split over the plurality of time slots to model one or more thermodynamic interactions occurring in the open-plan space, wherein the thermal model is generated by modelling the open-plan space as a plurality of interconnected cells of the PI-GNN with each interconnected cell serviced by a specific cooling unit from one or more cooling units; training, via the one or more hardware processors, the thermal model by performing a plurality of training steps in each of a plurality of iterations till training converges with a reference data, wherein the plurality of training steps comprising: inputting, a plurality of input features, information on time stamp, the plurality of exogenous variables, the associated control signal, and a current time reset length for each of the plurality of time slots as input to the PI-GNN; estimating a current thermal state corresponding to each of the plurality of interconnected cells based on a forward pass mechanism of the PI-GNN, wherein the current thermal state forms a part of a set of governing equations; generating an updated thermal state comprising a plurality of state variables as output, by the PI-GNN, wherein the updated thermal state is fed as one input to a subsequent iteration in the plurality of iterations; calculating a derivative of the plurality of state variables based on the generated updated thermal state, wherein the calculated derivative of the plurality of state variables forms part of the set of governing conditions; and training the PI-GNN by defining a physics neural network loss as sum of residuals of the set of governing conditions and an initial condition loss to obtain a trained thermal model; designing, via the one or more hardware processors, a PI-GNN based optimal controller by using the trained thermal model as a state estimator; and determining in real time, via the one or more hardware processors, a plurality of optimal temperature setpoints for the one or more cooling units at each of a plurality of control time-steps for an entire prediction horizon using the PI-GNN based optimal controller, wherein the each of the plurality of control time steps are indicative of a plurality of future thermal states predicted by the trained thermal model.

In another aspect, a system is provided. The system comprising a memory storing instructions; one or more communication interfaces; and one or more hardware processors coupled to the memory via the one or more communication interfaces, wherein the one or more hardware processors are configured by the instructions to: obtain a time series data pertaining to one or more cooling units in an open-plan space as input, wherein the time series data comprises information on a plurality of exogeneous variables, one or more dependency-based parameters, and an associated control signal; split the time series data over a plurality of time slots, wherein time is reset to zero at beginning of each of the plurality of time slots, and the plurality of exogeneous variables, an initial value of the one or more variables and the associated control signal are constants in each of the plurality of time slots; generate a thermal model based on a Physics Informed Graph Neural Network (PI-GNN) using the time series data split over the plurality of time slots to model one or more thermodynamic interactions occurring in the open-plan space, wherein the thermal model is generated by modelling the open-plan space as a plurality of interconnected cells of the PI-GNN with each interconnected cell serviced by a specific cooling unit from one or more cooling units; train the thermal model by performing a plurality of training steps in each of a plurality of iterations till training converges with a reference data, wherein the plurality of training steps comprising: inputting, a plurality input features, information on time stamp, the plurality of exogenous variables, the associated control signal, and a current time reset length for each of the plurality of time slots as input to the PI-GNN; estimating, a current thermal state corresponding to each of the plurality of interconnected cells based on a forward pass mechanism of the PI-GNN, wherein the current thermal state forms a part of a set of governing equations; generating an updated thermal state comprising a plurality of state variables as output, by the PI-GNN, wherein the updated thermal state is fed as one input to a subsequent iteration in the plurality of iterations; calculating a derivative of the plurality of state variables based on the generated updated thermal state, wherein the calculated derivative of the plurality of state variables forms part of the set of governing conditions; and training the PI-GNN by defining a physics neural network loss as sum of residuals of the set of governing conditions and an initial condition loss to obtain a trained thermal model; design a PI-GNN based optimal controller by using the trained thermal model as a state estimator; and determine in real time, a plurality of optimal temperature setpoints for the one or more cooling units at each of a plurality of control time-steps for an entire prediction horizon using the PI-GNN based optimal controller, wherein the each of the plurality of control time steps are indicative of a plurality of future thermal states predicted by the trained thermal model.

In yet another aspect, a non-transitory computer readable medium is provided. The non-transitory computer readable medium are configured by instructions for obtaining a time series data pertaining to one or more cooling units in an open-plan space as input, wherein the time series data comprises information on a plurality of exogeneous variables, one or more dependency-based parameters, and an associated control signal; splitting the time series data over a plurality of time slots, wherein time is reset to zero at beginning of each of the plurality of time slots, and the plurality of exogeneous variables, an initial value of the one or more variables and the associated control signal are constants in each of the plurality of time slots; generating a thermal model based on a Physics Informed-Graph Neural Network (PI-GNN) using the time series data split over the plurality of time slots to model one or more thermodynamic interactions occurring in the open-plan space, wherein the thermal model is generated by modelling the open-plan space as a plurality of interconnected cells of the PI-GNN with each interconnected cell serviced by a specific cooling unit from one or more cooling units; training the thermal model by performing a plurality of training steps in each of a plurality of iterations till training converges with a reference data, wherein the plurality of training steps comprising: inputting, a plurality of input features, information on time stamp, the plurality of exogenous variables, the associated control signal, and a current time reset length for each of the plurality of time slots as input to the PI-GNN; estimating a current thermal state corresponding to each of the plurality of interconnected cells based on a forward pass mechanism of the PI-GNN, wherein the current thermal state forms a part of a set of governing equations; generating an updated thermal state comprising a plurality of state variables as output, by the PI-GNN, wherein the updated thermal state is fed as one input to a subsequent iteration in the plurality of iterations; calculating a derivative of the plurality of state variables based on the generated updated thermal state, wherein the calculated derivative of the plurality of state variables forms part of the set of governing conditions; and training the PI-GNN by defining a physics neural network loss as sum of residuals of the set of governing conditions and an initial condition loss to obtain a trained thermal model; designing a PI-GNN based optimal controller by using the trained thermal model as a state estimator; and determining in real time a plurality of optimal temperature setpoints for the one or more cooling units at each of a plurality of control time-steps for an entire prediction horizon using the PI-GNN based optimal controller, wherein the each of the plurality of control time steps are indicative of a plurality of future thermal states predicted by the trained thermal model

In accordance with an embodiment of the present disclosure, each interconnected cell from the plurality of interconnected cells is represented by a node and a thermodynamic interaction between two interconnected cells from the plurality of interconnected cells is represented by an edge of the PI-GNN.

In accordance with an embodiment of the present disclosure, the plurality of input features comprise one or more node features, one or more edge features and one or more adjacency matrices corresponding to the PI-GNN.

In accordance with an embodiment of the present disclosure, the plurality of state variables comprise room temperature, humidity, window temperature and wall temperature.

In accordance with an embodiment of the present disclosure, the plurality of optimal temperature setpoints are used to jointly optimize and control the one or more cooling units in the open-plan space resulting in minimum energy and providing user thermal comfort.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this disclosure, illustrate exemplary embodiments and, together with the description, serve to explain the disclosed principles:
FIG. 1 illustrates a block diagram of an exemplary system for thermal optimization and control in open-plan spaces using physics-informed graph neural network based optimal controller, in accordance with an embodiment of present disclosure.
FIGS. 2A and 2B illustrates an exemplary flow diagram illustrating a method for thermal optimization and control in open-plan spaces using physics-informed graph neural network based optimal controller, in accordance with some embodiments of the present disclosure.
FIG. 3 is a schematic diagram of an open plan space layout, according to some embodiments of the present disclosure.
FIG. 4 depicts an architectural diagram of two-layer graph neural network (GNN) illustrating GNN message passing framework, according to some embodiments of the present disclosure.
FIG. 5 is a schematic diagram of an architecture of a physics informed graph neural network (PI-GNN), according to some embodiments of the present disclosure.
FIG. 6 is a schematic diagram illustrating representation of subgraphs structure for thermal optimization and control in open-plan spaces using physics-informed graph neural network based optimal controller, according to some embodiments of the present disclosure.
FIG. 7 depicts a block diagram illustrating a PI-GNN based optimal controller framework for thermal optimization and control in open-plan spaces, according to some embodiments of the present disclosure.
FIGS. 8A through 8D depict graphical representations illustrating thermal state profiles generated by PI-GNN, showcasing a comparison with the ground truth utilizing the implicit Backward-Euler scheme, in accordance with some embodiments of the present disclosure.
FIG. 9 depicts graphical representation illustrating the thermal comfort metric PPD obtained from PI-GNN with the ground truth, in accordance with some embodiments of the present disclosure.
FIG. 10 depicts graphical representation illustrating comparison between the regular PINN solution and the ground truth, in accordance with some embodiments of the present disclosure.
FIG. 11 depicts graphical representation illustrating comparison of performance of PI-GNN with the regular PINN, in accordance with some embodiments of the present disclosure.
FIG. 12 depicts graphical representation illustrating snapshot of spatial PPD variations, in accordance with some embodiments of the present disclosure.
FIG. 13 depicts graphical representation illustrating a comparison between the control performance of the method of the present disclosure with the baselines, in accordance with some embodiments of the present disclosure.
FIG. 14 depicts graphical representation illustrating evaluation of the performance of the method of the present disclosure against BL3, in accordance with some embodiments of the present disclosure.

### DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments. It is intended that the following detailed description be considered as exemplary only.

Open-plan spaces are becoming more popular in commercial buildings due to their efficient use of space and encouragement of user interactions. Such layouts are typically conditioned by the use of multiple heating ventilation and air conditioning (HVAC) systems like cassette air-conditioners uniformly fitted across the layout. However, asymmetry in the exposure of the perimeter of a large open-plan space to the ambient conditions, causes varying thermal loads to the building along its boundary. Further, heat-loads also vary depending upon the distance from the perimeter due to wall-window-surface induced convection and radiation. Indeed, despite conditioning, the achieved temperatures within the open-plan can have a difference as high as 10°C. Achieving uniform comfort despite varying heat-loads, while being energy efficient, therefore needs better control strategies than the default individual proportional-integral-derivative (PID) control in the cassette ACs.

In default PID control, each AC individually senses its return-air temperature and adjusts its supply air's flow or temperature accordingly. While PID control is computationally efficient, it is sub-optimal in open-plan offices due to the several reasons. First, due to air-mixing, the effects of one AC's control directly affects its neighbors. Lack of coordination among ACs can either lead to under-cooling or over-cooling. Second, even with uniform set-points on all ACs, achieved thermal comfort could well be non-uniform. Third, human comfort depends significantly also on MRT, which is mostly ignored in PID control. Finally, to implement any control in practice through a building management system (BMS), at best the set-point can be dynamically tuned to be realized by the PID control as any other control action needs firmware access to implement. Therefore, there is a need for better control in open-plan offices that 1) dynamically and jointly decide set-points across individual ACs; and 2) accounts for MRT-induced discomfort.

To algorithmically decide the set-points of multiple ACs jointly, a model is required that predicts effect of such coordinated actions for arbitrary heat-loads. Specifically, the model should capture causal relationship between a current cause (e.g., temperature set-points at multiple ACs) and a future effect achieved (e.g., comfort/energy). In general, such a thermal model is coupled with a short-term prediction of the future heat-loads (e.g., from weather feeds) and implemented as part of a model-predictive controller (MPC). In addition, the thermal model should explicitly handle MRT as a factor to ensure comfort in a large open-plan layouts.

Conventionally, thermal models for joint-control are broadly categorized as: 1) purely physics-based; 2) purely data-driven; and 3) physics-informed data-driven. Purely physics-based models explicitly model, through equations, the heat transfer, and mass-transfer dynamics across the layout at varying degrees of accuracy ranging from fine-grained computational fluid dynamics (CFD) approaches to coarse-grained lumped models. Such models, while potentially accurate, are computationally expensive to be viable in practical control in open-plans. Specifically, at any discretization of the open-plan into cells, air-mixing causes the states of the cells to be solvable only through a system of coupled non-linear differential equations. Purely data-driven models (e.g., long-short term memory (LSTM)) ignore physical constraints of the system and learn to optimal parameters of a machine-learning (ML) model that minimize errors in predicting the output given the input. Data-driven models are computationally excellent at deployment time; a forward pass through a neural network takes milliseconds and is comparable to the proportional-integral-derivative (PID). However, they may require significantly more data for training and their predictions may disobey laws of Physics (e.g., negative humidity). Physics-informed Neural Networks (PINNs) are a via media between the two approaches aiming to achieve the scalability of data-driven models, while exploiting (respecting) underlying physics of data while training (deployment/testing).

A PINN is an ML model that explicitly embeds governing physical equations into the loss function. Time derivatives of thermal states are obtained by automatic differentiation of ML libraries. Because PINNs are self-supervised, they do not need labelled state-data unlike pure data-driven approaches but can improve by fine-tuning over any available labelled state-data. Because PINNs are ML models, their inference of thermal state is a forward pass through a neural network and hence very fast in practice. A PINN model for HVAC has one output for each cell's achieved temperatures at time *t = τ*, given initial conditions at *t* = 0; and control set-points as inputs. However, PINNs do not scale beyond a few cells, which is impractical for larger open-plan offices. This lack of scale, which is characterized as acceptable prediction error in acceptable training time arises due to thermodynamic coupling between the cells of the open-plan office. The coupling also precludes using one PINN for each cell as inter-cell interactions need to be modeled explicitly like with equation-based purely-physical models.

The present disclosure addresses the unresolved problems of the conventional methods by using Physically-Informed Graph Neural Networks (PI-GNNs) for HVAC control. Embodiments of the present disclosure provide methods and systems for thermal optimization and control in open-plan spaces using physics-informed graph neural network based optimal controller. The method of the present disclosure centrally decides temperature setpoints for all ACs in the open-plan area using a PI-GNN model to estimate thermal states. The coupling between cells that is a bottleneck in PINNs is naturally handled as an edge (i.e., heat/mass transfer) that captures the interactions (i.e., air-mixing) between nodes (i.e., cells) in the PI-GNN. Further, wall surfaces are modeled as features of nodes (cells), the method of the present disclosure handles the MRT that results from the wall and window surface heating leading to better estimates of the comfort. PI-GNNs have been used in electrical distribution systems and standard CFD test cases, such as flow past a cylinder and Burger's equation. However, application of PI-GNNs for HVAC control is not explored. Like regular PINNs, PI-GNNs are not readily suitable for control problems as they require prior knowledge of the functional form of control input and exogenous variables. This problem is handled in the present disclosure using a time-resetting strategy.

In other words, the present disclosure provides a physics-informed graph neural network-based HVAC controller designed for open-plan spaces. Employing a multiple lumped-node approach in the present disclosure, a room is divided into smaller cells, assuming uniform thermal states within each. Each node in the graph represents a vertex, and the edges denote inter-cell air mixing. Extending a time resetting strategy, time-varying exogenous input (e.g., ambient temperature) and control inputs (e.g., temperature setpoints) are incorporated. Specifically, an entire time window is segmented into multiple time slots, each of length τ, resetting the time to zero at the beginning of each slot. Further, a zero-order hold assumption, maintaining constant ambient temperature and control inputs within each time slot is applied. The method of the present disclosure also considers the window surface temperature as an additional state, enhancing estimation of thermal comfort. More specifically, the present disclosure provides the following:
1. A PI-GNN is implemented to model thermal dynamics in a real-world open-plan room with 16 HVAC units. Given the ambient conditions, initial conditions, a few geometric properties, and set-points of all cells, the PI-GNN outputs an achieved temperature at a future point of time.
2. A model-predictive controller is implemented that optimizes the set-points to be chosen by leveraging the PI-GNN thermal model. The optimized set-points are then implemented on the AC's by controlling the fan-speed of the AC's using PID. A PID logic is tuned to ensure that attained temperatures stay within *TSP* ± 1°*C.*
3. The method of the present disclosure is evaluated based on a comparison with following baselines:
   a. Baseline 1 (BL1) as-is control that uses a temperature setpoint of 24 ± 1°*C* across all ACs.
   b. Baseline 2 (BL2) control that uses temperature set points of 22 ± 1°*C* for the AC units serving the perimeter regions and 24 ± 1°*C*for the AC units serving core region, again fixed temporally.
   c. Baseline 3 (BL3) model-based predictive control (MPC) with the thermal model solved numerically using the Backward-Euler scheme.
   d. Baseline 4 (BL4) MPC with regular PINN-based thermal model.

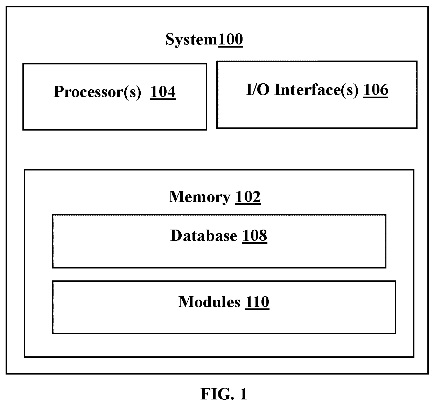

Referring now to the drawings, and more particularly to FIGS. 1 through 14, where similar reference characters denote corresponding features consistently throughout the figures, there are shown preferred embodiments, and these embodiments are described in the context of the following exemplary system and/or method.

FIG. 1 illustrates a block diagram of an exemplary system for thermal optimization and control in open-plan spaces using physics-informed graph neural network based optimal controller, in accordance with an embodiment of present disclosure.

In an embodiment, the system 100 includes or is otherwise in communication with one or more hardware processors 104, communication interface device(s) or input/output (I/O) interface(s) 106, and one or more data storage devices or memory 102 operatively coupled to the one or more hardware processors 104. The one or more hardware processors 104, the memory 102, and the I/O interface(s) 106 may be coupled to a system bus 108 or a similar mechanism.

The I/O interface(s) 106 may include a variety of software and hardware interfaces, for example, a web interface, a graphical user interface, and the like. The I/O interface(s) 106 may include a variety of software and hardware interfaces, for example, interfaces for peripheral device(s), such as a keyboard, a mouse, an external memory, a plurality of sensor devices, a printer and the like. Further, the I/O interface(s) 106 may enable the system 100 to communicate with other devices, such as web servers and external databases.

The I/O interface(s) 106 can facilitate multiple communications within a wide variety of networks and protocol types, including wired networks, for example, local area network (LAN), cable, etc., and wireless networks, such as Wireless LAN (WLAN), cellular, or satellite. For the purpose, the I/O interface(s) 106 may include one or more ports for connecting a number of computing systems with one another or to another server computer. Further, the I/O interface(s) 106 may include one or more ports for connecting a number of devices to one another or to another server.

The one or more hardware processors 104 may be implemented as one or more microprocessors, microcomputers, microcontrollers, digital signal processors, central processing units, state machines, logic circuitries, and/or any devices that manipulate signals based on operational instructions. Among other capabilities, the one or more hardware processors 104 are configured to fetch and execute computer-readable instructions stored in the memory 102. In the context of the present disclosure, the expressions processors and hardware processors may be used interchangeably. In an embodiment, the system 100 can be implemented in a variety of computing systems, such as laptop computers, portable computer, notebooks, hand-held devices, workstations, mainframe computers, servers, a network cloud and the like.

The memory 102 may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes. In an embodiment, the memory 102 includes a plurality of modules 102a and a repository 102b for storing data processed, received, and generated by one or more of the plurality of modules 102a. The repository 102b further comprises a first repository and a second repository. The plurality of modules 102a may include routines, programs, objects, components, data structures, and so on, which perform particular tasks or implement particular abstract data types.

The plurality of modules 102a may include programs or computer-readable instructions or coded instructions that supplement applications or functions performed by the system 100. The plurality of modules 102a may also be used as, signal processor(s), state machine(s), logic circuitries, and/or any other device or component that manipulates signals based on operational instructions. Further, the plurality of modules 102a can be used by hardware, by computer-readable instructions executed by the one or more hardware processors 104, or by a combination thereof. Further, the memory 102 may include information pertaining to input(s)/output(s) of each step performed by the processor(s) 104 of the system 100 and methods of the present disclosure.

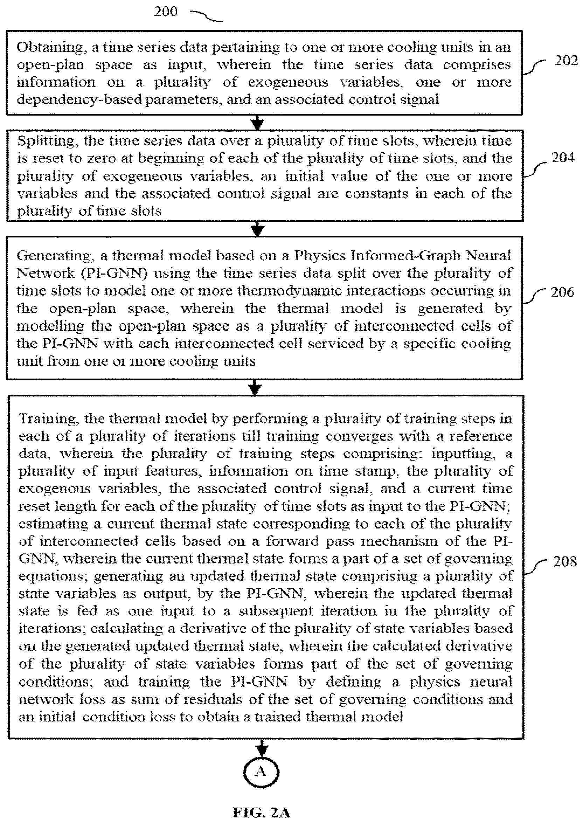

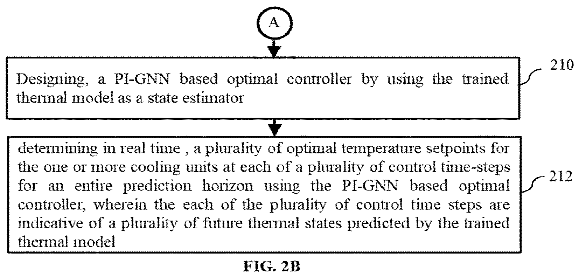

The repository 102b may include a database or a data engine. Further, the repository 102b amongst other things, may serve as a database or includes a plurality of databases for storing the data that is processed, received, or generated as a result of the execution of the plurality of modules 102a. Although the repository 102b is shown internal to the system 100, it will be noted that, in alternate embodiments, the repository 102b can also be implemented external to the system 100, where the repository 102b may be stored within an external database (not shown in FIG. 1) communicatively coupled to the system 100. The data contained within the external database may be periodically updated. For example, new data may be added into the external database and/or existing data may be modified and/or non-useful data may be deleted from the external database. In one example, the data may be stored in an external system, such as a Lightweight Directory Access Protocol (LDAP) directory and a Relational Database Management System (RDBMS). In another embodiment, the data stored in the repository 102b may be distributed between the system 100 and the external database. Functions of the components of the system 100 are now explained with reference to the steps in the flow diagram in FIGS. 2A and 2B.

FIGS. 2A and 2B, with reference to FIG. 1, is an exemplary flow diagram illustrating a method 200 for real-time optimization and control of substrate in motion chemical vapor deposition, using the system 100 of FIG. 1, in accordance with an embodiment of the present disclosure.

Referring to FIG. 2A, in an embodiment, the system 100 comprises one or more data storage devices or the memory 108 operatively coupled to the one or more hardware processors 104 and is configured to store instructions for execution of steps of the method by the one or more processors 104. The steps of the method 200 of the present disclosure will now be explained with reference to components of the system 100 of FIG. 1, the flow diagram as depicted in FIGS. 2A and 2B, and one or more examples. Although steps of the method 200 including process steps, method steps, techniques or the like may be described in a sequential order, such processes, methods, and techniques may be configured to work in alternate orders. In other words, any sequence or order of steps that may be described does not necessarily indicate a requirement that the steps be performed in that order. The steps of processes described herein may be performed in any practical order. Further, some steps may be performed simultaneously, or some steps may be performed alone or independently.

In an embodiment, at step 202 of the present disclosure, the one or more hardware processors 104 are configured to obtain a time series data pertaining to one or more cooling units in an open-plan space as input. The time series data comprises information on a plurality of exogeneous variables, one or more dependency-based parameters, and an associated control signal. In an embodiment, the one or more cooling units may comprise a heating, ventilation, and air conditioning (HVAC) system. The plurality of exogeneous variables include room temperature, humidity, and wall temperature, and are obtained from the HVAC system/equipment after initializing the HVAC system with initial values of each of the plurality of exogeneous variables. The one or more dependency-based parameters include a plurality of independent variables and a plurality of dependent variables.

Further, at step 204 of the method 200, the one or more hardware processors 104 are configured to split the time series data over a plurality of time slots. In an embodiment, time is reset to zero at beginning of each of the plurality of time slots, and the plurality of exogeneous variables, an initial value of the one or more variables and the associated control signal are constants in each of the plurality of time slots. In an embodiment, length of the time slots may be pre-defined or dynamically configured as per requirements. Further, at step 206 of the method 200, the one or more hardware processors 104 are configured to generate a thermal model based on a Physics Informed Graph Neural Network (PI-GNN) using the time series data split over the plurality of time slots to model one or more thermodynamic interactions occurring in the open-plan space. The thermal model is generated by modelling the open-plan space as a plurality of interconnected cells of the PI-GNN with each interconnected cell serviced by a specific cooling unit from one or more cooling units. Each interconnected cell from the plurality of interconnected cells is represented by a node and a thermodynamic interaction between two interconnected cells from the plurality of interconnected cells is represented by an edge of the physics informed graph neural network.

The steps 202 through 206 are further illustrated and better understood by way of following exemplary explanation.

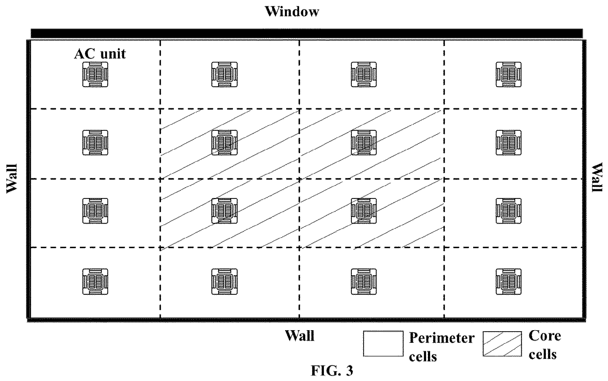

FIG. 3 is a schematic diagram of an open-plan space layout, according to some embodiments of the present disclosure. As shown in FIG. 3, a common open-plan space layout is illustrated without solid partitions with *N* cells in a room. Each cell is serviced by a specific cooling unit (i.e., a dedicated HVAC actuator) to ensure uniform thermal conditions with the cell. Each HVAC unit is equipped with an air temperature sensor and a dedicated controller, typically of PID type. The controller's goal is to align the air temperature with the thermostat setpoint. However, even an identical setpoint for all actuators may lead to uneven thermal comfort because MRT is ignored. For example, users near windows might experience more discomfort than those in the core region. To address this, adjusting the thermostat settings of HVAC units differently is necessary. Nonetheless, varying temperatures in cells can lead to air mixing, making it challenging to achieve desired setpoints everywhere. Considering two adjacent cells with setpoints 20 °*C* and 24 °*C* due to air mixing, the desired setpoint may never be reached, resulting in cell temperatures somewhere between the setpoints. Thus, there's a need for informed decision-making that considers not only HVAC control but also explicitly accounts for the surface temperatures of walls and windows and air-mixing.

In the present disclosure, Fanger's Predicted Percentage Dissatisfied (PPD) is used as a widely accepted metric in building engineering to evaluate general thermal comfort. With *N* HVAC actuators and numerous thermostat setpoint (*T_{SP}*) combinations ensuring user comfort, the focus of the present disclosure lies on identifying the combination that minimizes overall HVAC energy consumption. The optimal control problem can be formally stated as shown in equation (1): ${min}_{{T}_{SP}} {\sum }_{t}^{t + Hδt} {\sum }_{k = 1}^{N} {E}_{{HAVC}_{k}}$ where *H* is the number of control-steps in the prediction horizon and *E_{HAVCₖ}* is the HVAC energy of the *k^{th}*actuator, given by equation (2): ${E}_{HVAC} = \dot{m} \frac{{h}_{ra} - {h}_{sa}}{COP}$

The subscript *k* is conveniently drop. Here, *ṁ* represents the actuator supply air mass flowrate, while *hᵣₐ* and *hₛₐ* denote return air and supply air enthalpies, respectively. The specific enthalpy is determined by air temperature and humidity. *COP* refers to coefficient of performance of the HVAC unit, typically varying with setpoint and outdoor air temperature in cassette ACs. In the present disclosure, simplification is done by assuming a constant *COP,* across the ACs and across the loads. The constraints are as follows:
1. Air temperature balance, $\begin{matrix}{C}_{a} \frac{{dT}_{a}}{dt} = \dot{Q} + {U}_{in}^{wall} {A}_{wall} \left({T}_{wall}-{T}_{a}\right) + {U}_{in}^{win} {A}_{win} \left({T}_{win}-{T}_{a}\right) + \\ {\sum }_{j ∈ N} {\dot{m}}_{j} {c}_{p} \left({T}_{aj}-{T}_{a}\right) + \dot{m} {c}_{p} \left({T}_{sa}-{T}_{a}\right)\end{matrix}$
2. Wall surface temperature balance, ${C}_{wall} \frac{{dT}_{wall}}{dt} = {U}_{in}^{wall} {A}_{wall} \left({T}_{a}-{T}_{wall}\right) + {U}_{out}^{wall} {A}_{wall} \left({T}_{∞}-{T}_{wall}\right)$
3. Window surface temperature balance, $\begin{matrix}{C}_{win} \frac{{dT}_{win}}{dt} = {U}_{in}^{win} {A}_{win} \left({T}_{a}-{T}_{win}\right) + {U}_{out}^{win} {A}_{win} \left({T}_{∞}-{T}_{win}\right) + \\ {α}_{win} {A}_{win} {Q}_{sol}\end{matrix}$
4. Humidity balance, $ρV \frac{{dW}_{a}}{dt} = {\dot{m}}_{g} + {\sum }_{j ∈ N} {\dot{m}}_{j} \left({W}_{aj}-{W}_{a}\right) + \dot{m} \left({W}_{sa}-{W}_{a}\right)$
5. Thermal comfort, $PPD \leq 10 % , ∀ t ∈ \left[t:t+HΔt\right]$
6. HVAC unit air mass flowrate, $\dot{m} = PID \left({T}_{a}, {T}_{SP}\right) ,$ $0 \leq \dot{m} \leq {\dot{m}}_{max} .$ Constraints (equations 3-9) are enforced at each cell. Additionally, for simplicity, outdoor air infiltration and internal heat gain from solar radiation is not considered. Internal loads from occupancy and other sources are treated as constants. Importantly, these assumptions are not constraints of the method of the present disclosure and can be relaxed in a more comprehensive context. It is noted that equations (4) and (5) pertain solely to perimeter cells, excluding core cells where *A_{wall}* and *A_{win}* are zero. Consequently, *T_{wall}* and *T_{win}* for core cells are updated to match *Tₐ* at every time-step. To compute the *PPD, MRT* is determined as the temperature average weighted by area, given by equation (10): $MRT = \frac{\left({A}_{T}-{A}_{wall}-{A}_{win}\right) {T}_{a} + {A}_{wall} {T}_{wall} + {A}_{win} {T}_{win}}{{A}_{T}}$ where *A_{T}* is the total surface area of a cell. From Equation (10), *MRT* is the same as *Tₐ* for core cells.

Table 1 provides the notation used for thermal optimization and control in open-plan spaces using physics-informed graph neural network based optimal controller.

**Table 1**

| Symbol | Meaning (units) |
|---|---|
| **Thermal model and optimisation** | |
| *t*, *δt* | Time instant and control time-step (*s*) |
| 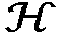 | Prediction horizon (*s*) |
| *T, W* | Temperature ( *°C*) and Humidity ratio (*gkg*^{*-*1} ) |
| *MRT* | Mean Radiant Temperature ( °*C*) |
| *T_{SP}* | Temperature setpoint vector( °*C*) |
| *C* | Thermal capacitance (*J* · *K*⁻¹ ) |
| *cₚ* | Specific heat capacity of air (*J* · *kg*⁻¹ · *K*^{*-*1}) |
| *ρ* | Air *density* (*kg · m*⁻³ ) |
| *V* | Room volume (*m*³) |
| *A* | surface area (*m*²) |
| *E_{HVAC}* | Energy consumed by HVAC unit *(W* · *s*) |
| *Qₛₒₗ* | Incident solar radiation (*W* · *m*⁻² ) |
| *Q̇* | Room internal load (*W*) |
| *h* | Specific enthalpy (*J* · *kg*⁻¹) |
| *Uᵢₙ*, *Uₒᵤₜ* | Indoor and outdoor heat transfer coefficient (*W* · *m*²/*K*) |
| *ṁ* | Mass flowrate (*kg · s*⁻¹) |
| *ṁ_{g}* | Building internal moisture generation (*kg · s*⁻¹) |
| *PPD* | Predicted Percentage Dissatisfied (%) |
| *N* | Number of cells in open-plan room |
| *COP* | Coefficient of performance of HVAC unit |

| **Subscripts and Superscripts** | |
|---|---|
| *a,* ∞*, sa* | Air, outdoor ambient, and supply air |
| *Wall, win* | wall, window 0 |
| *x̂* | Approximation of *x* |
| *t* | At time instant *t* |
| 0 | At time instant 0 |

| **PI-GNN** | |
|---|---|
| *G* | GNN model |
| *τ* | Time reset length (*s*) |
| *θ* | Parameters/weights of neural network |
| *e* | edge feature |
| *X* | node features |
| *A* | Adjacency matrix |
| *α* | Learning rate |
| 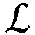 | Loss function |
| 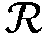 | Residual of Equations (3)-(6) |
| *N_{c}* | # collocation subgraphs for ODE residual losses |
| *N*₀ | # subgraphs for initial value losses |
| *EPOCHS* | # of training epochs |

In an embodiment, there are challenges with various baseline models. **Purely physical models:** Equations 3-6 represent a system of coupled equations of thermal state. The presence of air-mixing (*ṁⱼ* in Equations 3 and 6) between cells due to temperature differences couples the ODEs across the cells. To solve these coupled ODEs, a fixed-point iteration across multiple equations ism required. This is computationally challenging as the function evaluations may not be sufficient for an optimizer for real-time control.
**Purely data-driven models:** Efficient computation of states in dynamical systems can be achieved through neural-network approaches like long-short term memory (LSTM), and so on. However, their effectiveness relies on the observability of all state parameters. For example, conventional measurements typically focus on air temperature and humidity, leaving surface wall/window temperatures unmeasured. Purely data-driven techniques may yield unphysical results.
**Physics-informed data-driven models:** One approach to accelerate the optimizer and evaluate numerous functions is by employing a PINN. While the states inference involves a rapid forward pass of the neural network, standard PINNs face scalability challenges. For example, in a 16-cell setup as shown in FIG. 3, regular PINNs with a time-resetting strategy would lead to an input feature space of length 115, encompassing parameters such as $\left(t,{T}_{∞} {Q}_{sol},\left[{A}_{wall}\right]\times 16,\left[{A}_{win}\right]\times 16,\left[{T}_{a}^{0}\right]\times \right.$ $\left.16,\left[{T}_{wall}^{0}\right]\times 16,\left[{T}_{win}^{0}\right]\times 16,\left[{W}_{a}^{0}\right]\times 16,\left[{T}_{SP}\right]\times 16\right)$. The output feature space, $\left(\left[{T}_{a}^{t}\right]\times 16,\left[{T}_{wall}^{t}\right]\times 16,\left[{T}_{win}^{t}\right]\times 16,\left[{W}_{a}^{t}\right]\times 16\right)$, is of length 64. Training a PINN model under these conditions would demand a highly complex neural network architecture and substantial computing resources. Thus, there is a requirement for a state-estimator that is both scalable and fast, facilitating the selection of optimal HVAC actuator setpoints at each control time-step.

The present disclosure utilizes graph neural networks into physics-informed learning to obtain a physics-informed graph neural network (PI-GNN) to better handle the mentioned challenges. PI-GNN leverages the strengths of physics-informed data-driven models. The graph network intuitively captures dependencies on neighboring cells through network edges. The physics-informed component encodes ordinary differential equations (ODEs) into the loss function, effectively constraining dependencies on cell states. PI-GNN acts as state-estimator for a receding-horizon approach that aims to attain optimal joint control of multiple cooling units in an open-plan room.

Graph Neural Networks employ deep learning techniques on graphs, where a graph (*G*) comprises of nodes (*V*) and edges (*E*) denoted as *G* = (*V, E*)*.* Both nodes and edges possess distinct features, represented by node feature vectors *xᵢ* and edge feature vectors *eᵢⱼ*, with *i* and *j* denoting node indices. The core concept in most GNN architectures is graph convolution, crucial for tasks like node, edge, or graph regression. In the present disclosure, a GNN node corresponds to a cell within the open-plan room.

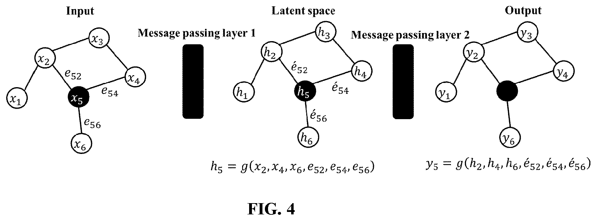

In graph convolution, in forward pass (inference), the prediction of a node's features in the next layer relies on the features of its neighbors. It transforms the node's features *xᵢ* into a latent space *hᵢ*. GNN operates through a message-passing framework, involving three primary steps: (1) each node in the graph computes a message for its neighbors, derived from the node, the neighbor, and the connecting edge; (2) messages are transmitted, and each node aggregates received messages using a permutation-invariant function, typically a sum or average; and (3) each node updates its attributes based on its current attributes and the aggregated messages. FIG. 4 depicts an architectural diagram of two-layer graph neural network (GNN) illustrating GNN message-passing framework, according to some embodiments of the present disclosure. As shown in FIG. 4, focusing on node five, in the initial message passing layer, its update to *h*₅ involves features from neighboring nodes two, four, and six, along with their associated edge features. Subsequently, in the second message passing layer, node five further updates to *y*₅ through a similar process.

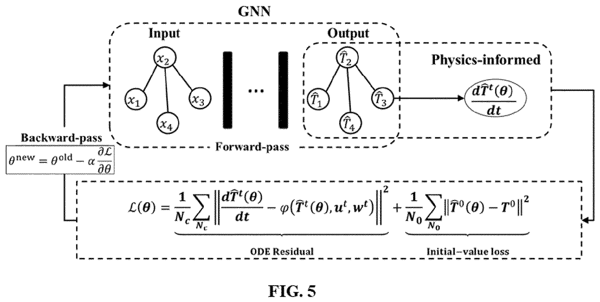

FIG. 5 is a schematic diagram of an architecture of a physics informed graph neural network (PI-GNN), according to some embodiments of the present disclosure. As shown in FIG. 5, a network of interconnected nodes with dynamics governed by $\frac{dT}{dt} = Φ \left(T, u, w\right)$ is modeled, where *T* is the dependent variable, *t* the independent variable, *u* the control input, and w the exogenous input. Each node's behavior is influenced by a set of neighbors, and the states of network nodes are represented using a GNN. The derivatives of the GNN outputs *T̂*'s are obtained through automatic differentiation with respect to input features *x* (typically representing time *t*)*.* The neural network loss, denoted as 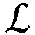 (*θ*), combines physics loss (i.e., residual of ODE) and initial condition loss. Notably, if observed samples of dependent variables are available, they can contribute as an additional loss term.

Further, at step 208 of the method 200, the one or more hardware processors 104 are configured to train the thermal model by performing a plurality of training steps in each of a plurality of iterations till training converges with a reference data (which may be available from one or more known sources). The plurality of training steps comprising first inputting, a plurality input features, information on time stamp, the plurality of exogenous variables, the associated control signal, and a current time reset length for each of the plurality of time slots as input to the PI-GNN. In an embodiment, the plurality of input features comprise one or more node features, one or more edge features and one or more adjacency matrices corresponding to the PI-GNN. Further, a current thermal state corresponding to each of the plurality of interconnected cells is estimated based on a forward pass mechanism of the PI-GNN. The current thermal state forms a part of a set of governing equations. In an embodiment, the governing conditions may be expressed as equations. The set of governing equations include equations 3-6. Furthermore, an updated thermal state comprising a plurality of state variables as output is generated by the PI-GNN. The updated thermal state is fed as one input to a subsequent iteration in the plurality of iterations. A derivative of the plurality of state variables is further calculated based on the generated updated thermal state. The calculated derivative of the plurality of state variables forms part of the set of governing conditions. In an embodiment, the plurality of state variables comprise room temperature, humidity, window temperature and wall temperature. Further, the PI-GNN is trained by defining a physics neural network loss as sum of residuals of the set of governing conditions and an initial condition loss to obtain a trained thermal model.

The step 208 is further illustrated and better understood by way of the following exemplary explanation.

The original PINN formulation requires a closed-form analytical expression for exogenous and control inputs to simplify the neural network architecture. To address this, the time-resetting strategy is leveraged. The simulation time-window is divided into smaller time slots of length *τ*. Within each time slot, initial values, exogenous, and control inputs are held constant (zero-order hold). The states at the end of each time slot become the initial values for the next slot. The method of the present disclosure eliminates the need for a closed-form expression, especially for exogenous and control inputs, as they are held constant within each time slot.
**Node features:** Because solutions for equations 3-6 are aimed to be found at each node within the network, the node features encompass the following:
- Time *t* ∈ [0, *τ*]
- Ambient temperature *T*_{∞}
- Ambient solar radiation *Qₛₒₗ*
- Wall area *A_{wall}*
- Window area *A_{win}*
- Temperature setpoint *T_{SP}*
- Initial air temperature ${T}_{a}^{0}$
- Initial wall temperature ${T}_{wall}^{0}$
- Initial window temperature ${T}_{win}^{0}$
- Initial humidity ratio ${W}_{a}^{0}$
Because *t, T*_{∞}*,* and *Qₛₒₗ* are global features, they will be the same for nodes within a subgraph. It is noted that *T_{SP}* is among the input features and it signifies that *T_{SP}* gets translated to m through the PID logic during the physics loss calculations.
**Edge features:** Air-mixing flowrate between two cells (denoted as *ṁⱼ* in Equations 3 and 6) is characterized using an air temperature difference-based model. Consequently, the edge feature connecting nodes *i* and *j* is computed as *eᵢⱼ = T_{aᵢ} - T_{aⱼ}.*

The PI-GNN training process is better understood by way of following exemplary pseudocode provided as an explanation.

### Hyperparameters:

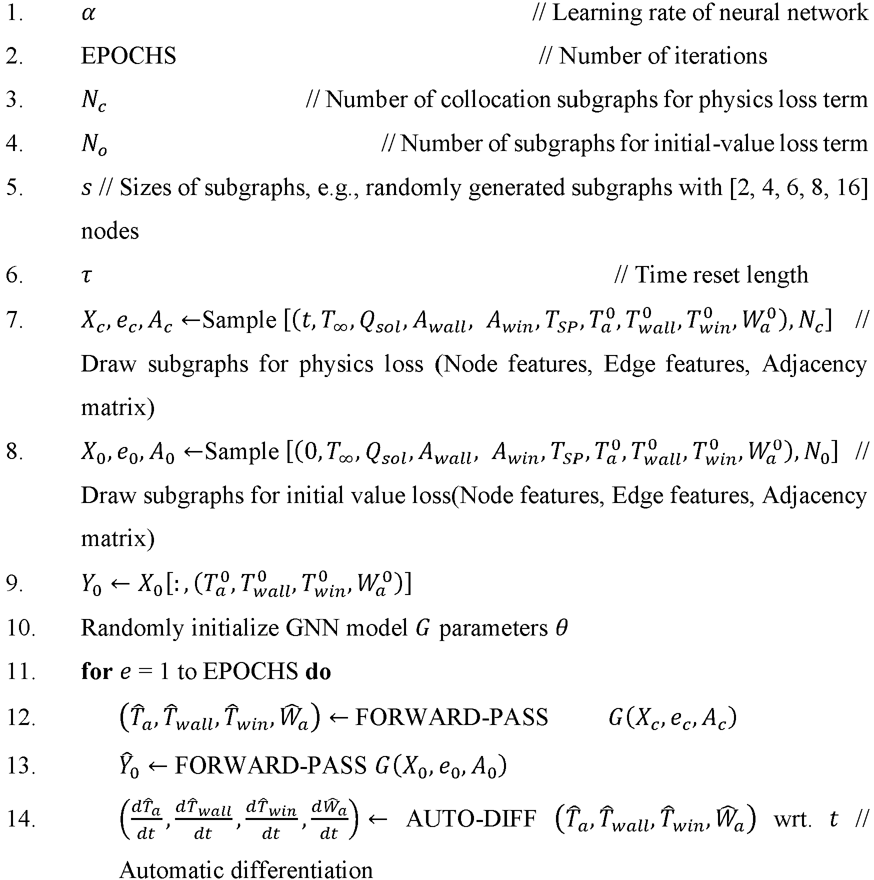

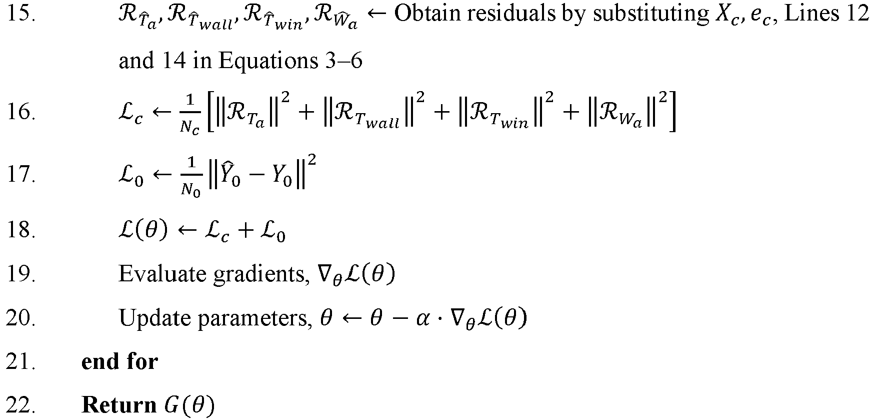

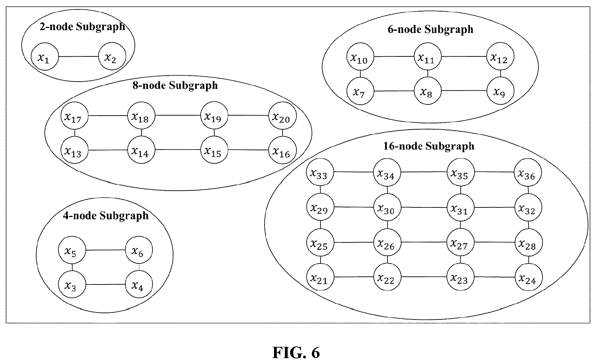

As shown in the above pseudocode, first hyperparameters are initialized, including the learning rate *α* and training EPOCHS, in Lines 1 and 2. Subsequently, the number of subgraphs for physics and initial-value loss evaluation are set in Lines 3 and 4. The use of subgraphs, defined by the number of cells s in Line 5, enhances training efficiency and expressiveness compared to full graph training. This approach is especially effective for handling graphs of varying sizes in a single iteration. The time-resetting window length *τ* is established in Line 6. Collocation subgraphs (*N_{c}*) and initial-value subgraphs (N₀) with sizes randomly sampled from s are generated in Lines 7 and 8. Specifically, subgraphs with two, four, six, eight, and 16 nodes are considered. FIG. 6 is a schematic diagram illustrating representation of subgraphs structure for thermal optimization and control in open-plan spaces using physics-informed graph neural network based optimal controller, according to some embodiments of the present disclosure. A Latin Hypercube Sampling (LHS) technique, known for better sampling coverage than standard random sampling is employed to sample input features within their respective ranges (Lines 7 and 8). GNN parameters/weights *θ* are initialized in Line 10. In the main iteration loop (Line 11), a forward pass of the GNN is conducted (Lines 12 and 13), obtaining estimates of thermal states at *X_{c}* and *X*₀*,* along with their respective edge features (*e_{c}* and *e*₀) and adjacency matrices (*A_{c}* and *A*₀). Derivatives of air, wall, and window temperatures, and humidity ratio with respect to time are evaluated at Line 14 through automatic differentiation. Model estimates, gradients, external inputs, and control inputs are then used to calculate ODE residuals in Line 15 using equations 3-6. The physics loss ( 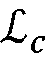 ) is computed as the sum of individual mean squared ODE residuals (Line 16), while the initial value loss ( 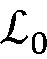 ) measures mean squared error between the estimated *Ŷ*₀ (Line 13) and the sampled *Y*₀ (Line 9). The total loss function ( 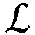 (*θ*) is the sum of physics and initial-value losses. Gradients of the loss function with respect to network parameters are assessed in line 19, and network parameters are updated using the standard gradient descent algorithm in line 20. Distinct weights are assigned to temperature residuals and humidity ratio residuals due to their differing units.

Further, at step 210 of the method 200, the one or more hardware processors 104 are configured to design a PI-GNN based optimal controller by using the trained thermal model as a state estimator. Furthermore, at step 212 of the method 200, the one or more hardware processors 104 are configured to determine in real time a plurality of optimal temperature setpoints for the one or more cooling units at each of a plurality of control time-steps for an entire prediction horizon using the PI-GNN based optimal controller. Here, each of the plurality of control time steps are indicative of a plurality of future thermal states predicted by the trained thermal model. In an embodiment, the plurality of optimal temperature setpoints are used to jointly optimize and control the one or more cooling units in the open-plan space resulting in minimum energy and ensuing user thermal comfort.

The steps 210 and 212 are further illustrated and better understood by way of following exemplary explanation.

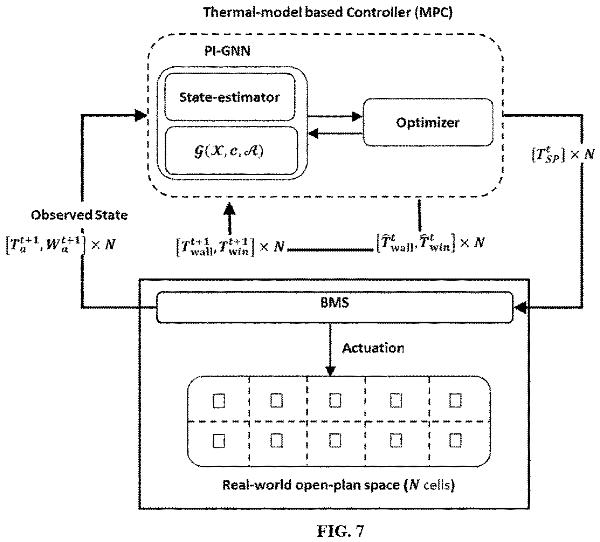

The control is executed by solving the optimization problem with constraints (equations 1-9) using a receding-horizon technique at each control step, employing a predictive model of the system. The above pseudocode is implemented to yield the trained thermal model (i.e., PI-GNN model) *G*(*θ*), serving as the state-estimator for an optimization framework of the present disclosure. FIG. 7 depicts a block diagram illustrating a PI-GNN based optimal controller framework for thermal optimization and control in open-plan spaces, according to some embodiments of the present disclosure. The PI-GNN based optimal controller engages with real-world environment at each control time-step, as depicted in FIG. 7. The optimal controller outputs optimal temperature setpoints for the entire prediction horizon. Notably, with *N* cells and 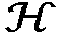 prediction horizon steps, there are *N* × 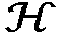 decision variables in the optimization. In an embodiment, a BMS implements the first *N* setpoints $\left[{T}_{SP}^{t}\right] \times N$ from entire prediction horizon (receding-horizon) simultaneously at all actuators in the open-plan space. The environment transitions to a new state, and the BMS monitors state variables. In the subsequent control step, these new state variables serve as inputs to the optimal controller (i.e., alternatively referred as thermal-model-based controller), and the closed-loop control process repeats. It is noted that only air temperature and humidity are measured, while *T_{wall}* and *T_{win}* are internally estimated by the PI-GNN using latest values of observed variables.

### EXPERIMENTAL SETUP:

In an embodiment, effectiveness of the method of the present disclosure has been assessed using a calibrated model of a real-world open-plan room with a total area of 1860 m², cooled by 16 identical AC units (as depicted in FIG. 3). The room was divided into cells based on the AC units' design region of influence. Each AC can deliver 5000 CFM and is individually controllable. The HVAC units have been designed for a peak occupancy of 200, and the east facade has windows with U-value, solar heat gain coefficient and absorptivity coefficient of 1.2, 0.25, and 0.2, respectively. Wall material thermal capacitance values were sourced from the design document. The office space is located in a tropical climatic region where *T*_{∞} ∈ [14.5, 39.5]°C. The experiments aim to assess: (1) accuracy of the PI-GNN thermal model compared to a regular PINN model, and (2) efficiency of PI-GNN when employed in the control of the method of the present disclosure versus various baseline controls.

### PI-GNN model evaluation

A. **Ground truth:** A backward-Euler scheme, known for its accuracy and numerical stability is employed to solve for thermal states (Equations 3-6). The simulation time-step is 15 minutes. Constants utilized in thermal models (Equations 3-6) are outlined in Table 2. In Table 2, the loads and thermal capacitance value are per cell. All values are in SI units unless otherwise specified. Temperatures are in °*C*.

**Table 2**

| Parameter | Value | Parameter | Value |
|---|---|---|---|
| *Q̇* | 3750 | *Cₐ*, *C_{wall}, C_{win}* | 600e3, 80e3, 1e3 |
| *V* | 495 | *ρ, C_{P}* | 1.2, 1005 |
| *Tₛₐ, Wₛₐ* (*g.kg*⁻¹) | 13, 88 | Latent load | 1250 |
| *ṁ* | ∈ [0, 2.5] | *T_{SP}* | ∈ [15, 30] |

In the present disclosure, internal sensible and latent loads as constants in the experiments. Despite latent loads being constants, *ṁ_{g}* in Equation 6 dynamically varies since it is a function of the latent heat of vaporization (dependent on *Tₐ*).
B. **Regular PINN specific details:** For a 16-cell room configuration, input feature space is of length 115, including parameters like $\left(t,{T}_{∞}^{t},{Q}_{sol}^{t},\left[{A}_{wall}\right]\times 16,\left[{A}_{win}\right]\times \right.$ $\left.\left.16, \left[{T}_{a}^{0}\right]\times 16,\left[{T}_{wall}^{0}\right]\times 16,\left[{T}_{win}^{0}\right]\times 16,\left[{W}_{a}^{0}\right]\right]\times 16,\left[{T}_{sp}^{t}\right]\times 16\right)$. Output feature space, $\left(\left[{T}_{a}^{t}\right]\times 16,\left[{T}_{wall}^{t}\right]\times 16,\left[{T}_{win}^{t}\right]\times 16,\left[{W}_{a}^{t}\right]\times 16\right)$, is of length 64. *t* is sampled from [0, *τ*] with *τ* = 15 minutes, temperatures range from [15, 40] °*C*, humidity is sampled from [8, 20] (*g.kg*⁻¹), and *T_{SP}*from [15, 30] °*C. Tanh* activation function is employed for hidden layers, as it has been demonstrated to perform better in PINNs due to its continuous differentiability.
C. **PI-GNN specific details:** In the present disclosure, two popular GNN architectures namely Graph Convolution Network (GCN) and Graph Attention Network (GAT) are assessed. Empirically, it is found that GAT outperforms GCN by explicitly incorporating edge features, thereby enhancing GNN performance. Notably, GCN architecture lacks capability to consider edge features as inputs. *N_{c} =* 5000 collocation subgraphs are generated for physics loss and *N*₀ = 1000 subgraphs are generated for initial-value loss. Specifically, subgraphs with two, four, six, eight, and 16 nodes are examined. Each node has 10 input features $\left(t, {T}_{∞}^{t}, {Q}_{sol}^{t}, \left[{A}_{wall}\right], \left[{A}_{win}\right], \left[{T}_{a}^{0}\right], \left[{T}_{wall}^{0}\right], \left.\left[{T}_{win}^{0}\right]\right], \left[{T}_{sp}^{t}\right]\right)$ and predicts four outputs $\left(\left[{T}_{a}^{t}\right], \left[{T}_{wall}^{t}\right], \left[{T}_{win}^{t}\right], \left[{W}_{a}^{t}\right]\right)$. Table 3 outlines key hyperparameters employed in the training of both the PINN and PI-GNN models.

**Table 3**

| Hyper-parameter | Value | Hyper-parameter | Value |
|---|---|---|---|
| # nodes per hidden layer | 256 | # hidden layers | 2 |
| Hidden layer activation | Tanh | Optimiser | Adam |
| Output layer activation | Linear | *α* | 1*e*⁻³ |
| Input normalisation | *Min - Max,* [-1, +1] | | |

D. **Performance metric for thermal model evaluation:** Thermal models are assessed using two metrics: (1) average relative error between predicted and ground truth values for *Tₐ*'s, *T_{wall}'*s, *T_{win}*'s*, Wₐ*'s; (2) training CPU time. Performance of the regular PINN is evaluated on configurations with two, four, six, and eight cells, in addition to the real-world 16-cell setup.

**Evaluation of the method of the present disclosure:** The decision variables for joint AC unit control are the indoor air temperature setpoints (*Tₛₚ*). Control efficacy of the method of the present disclosure is evaluated against following baseline controls:
(1) Baseline 1 (BL1) (As-is): Maintains constant temperature setpoints (*T_{SP}*) = 24 ± 1 °*C* ) for all AC units throughout their operation.
(2) Baseline 2 (BL2) (Spatially varying TSP): Adapts temperature setpoints to address discomfort variations. Sets (*T_{SP}*) = 22 ± 1 °*C* ) for AC units serving perimeter cells and (*T_{SP}*) = 24 ± 1 °*C* ) for AC units serving core cells. The next two baselines and the method of the present disclosure use model-based predictive control with a 15-minute control time-step (*δt*) and a four control-step prediction horizon ( 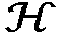 ).
(3) Baseline 3 (BL3) (Backward-Euler based MPC): Solves the thermal model using the Backward-Euler scheme. Due to inner iteration challenges, a non-linear optimizer proves ineffective.
(4) Baseline 4 (BL4) (Regular PINN-based MPC): Utilizes the regular PINN model to predict thermal parameters over an optimization horizon.
**Performance metrics for control evaluation:** Two metrics are used: (1) Annual HVAC energy consumption in MWh and (2) the percentage of HVAC operation time with discomfort (PPD > 10%). Lower energy usage and fewer hours with unmet comfort indicate a superior control strategy. For PPD calculation, local air velocity, user metabolic rate, and clothing insulation are fixed at 0.1 m/s, 1.2 met, and 0.5 Clo, respectively. The control time-step *δt* is 15 minutes and the prediction horizon 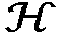 is four control time-steps.

### EXPERIMENTAL RESULTS:

### PI-GNN evaluation

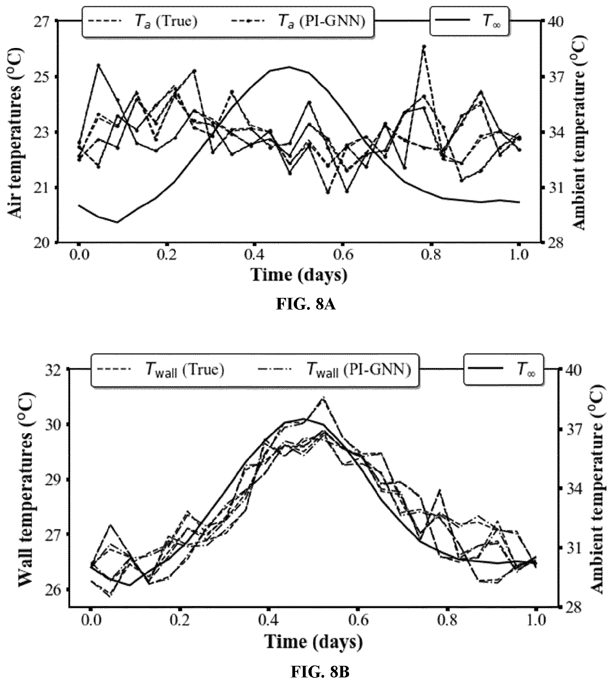

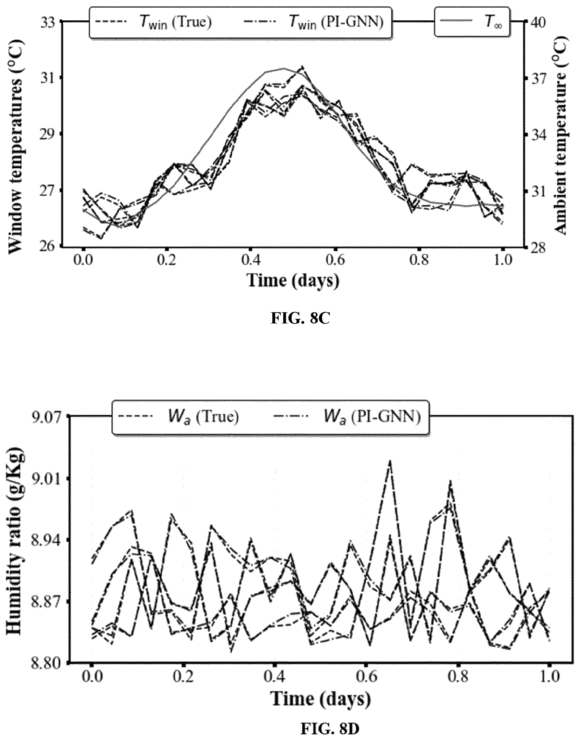

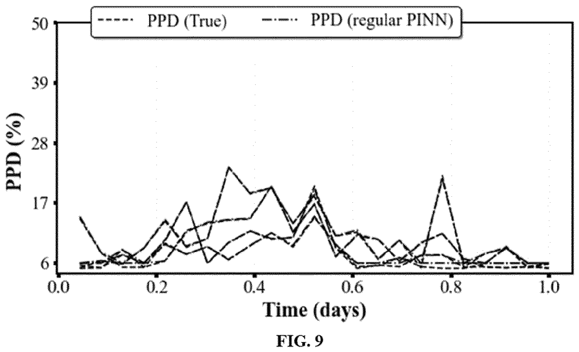

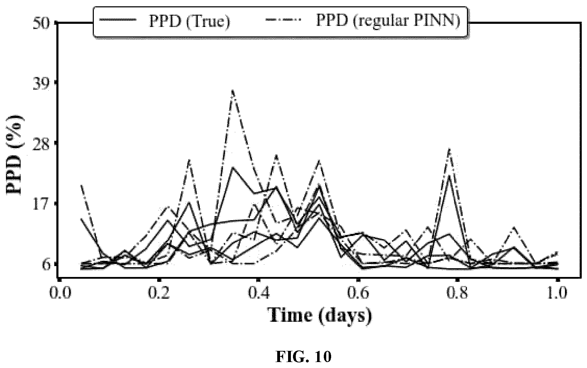

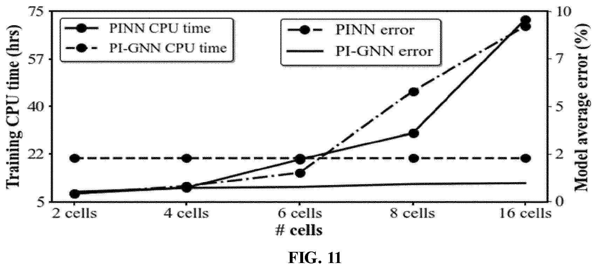

A. **Structure:** FIGS. 8A through 8D depict graphical representations illustrating thermal state profiles generated by PI-GNN, showcasing a comparison with the ground truth utilizing the implicit Backward-Euler scheme, in accordance with some embodiments of the present disclosure. As shown in FIGS. 8A through 8C, the X-axis denotes time in days, and cell air temperatures, wall temperatures, and window temperatures, respectively are shown on the primary Y-axis. The secondary Y-axis illustrates ambient temperature (in °*C*)*.* In FIG. 8D, the Y-axis represents humidity ratio in g/Kg. Observations reveal a strong alignment between PI-GNN and the ground truth data, as evidenced by the solid lines and dashed lines closely overlapping in most instances. The average spatio-temporal (across all cells and over time) errors for *Tₐ*, *T_{wall} , T_{win},* and *Wₐ* are 0.7%, 0.85%, 0.95%, and 0.95%, respectively, across the annual profiles. To emphasize the accuracy of predictions, FIG. 8D zooms into a one-day time window for four cells. Specifically, For FIGS. 8A through 8D, two perimeter and two core cells each are selected, whereas for FIGS. 8B and 8D, all four cells are perimeter cells. FIG. 9 depicts graphical representation illustrating the thermal comfort metric PPD obtained from PI-GNN with the ground truth, in accordance with some embodiments of the present disclosure. PPD, a derived metric dependent on non-linear functions of thermal states for *Tₐ*, *T_{wall}, T_{win},* and *Wₐ*, yields an error of 1.5%.
**B. PI-GNN vs baseline (regular PINN):** The regular PINN yielded unsatisfactory results in a real-world setup (16 cells) with the common neural-network hyperparameters as shown in Table 3. FIG. 10 depicts graphical representation illustrating comparison between the regular PINN solution and the ground truth, in accordance with some embodiments of the present disclosure. FIG. 10 reveals an average spatio-temporal error of 16%. To better understand the limitations of the regular PINN architecture, focused experiments have been conducted on an open-plan room divided into hypothetical configurations of two, four, six, and eight cells. In each configuration, the regular PINN was trained from scratch due to the changing number of features. In contrast, PI-GNN had a unified training process through subgraph sampling shown in FIG. 6. FIG. 11 depicts graphical representation illustrating comparison of performance of PI-GNN with the regular PINN, in accordance with some embodiments of the present disclosure. As shown in FIG. 11, the X-axis denotes the number of cells into which the open-plan room was divided. The primary Y-axis illustrates neural network training time in hours, while the secondary Y-axis represents thermal state estimation error. The thermal state estimation error is a single value derived from the maximum errors in estimating *Tₐ*, *T_{wall}, T_{win},* and *Wₐ.* For the regular PINN, training time ranges from eight to 72 hours as the number of cells increases from two to 16. Satisfactory predictions are observed for two to six cells, with errors varying from 0.4% to 1.5%. However, for eight and 16 cells, performance deteriorates, yielding errors of 6% and 9%. This decline may be attributed to the regular PINN requiring a more complex neural network architecture, resulting in increased training time for same accuracy. In the present disclosure, experiments are performed with a unified training approach for all cells in the regular PINN using input feature masking. However, this also necessitated a sophisticated neural network architecture, and a satisfactory solution could not be found. Alternatively, scaling the regular PINN by training a generalized model on a single cell with a fixed number of neighbors may seem plausible. In the setup of the present disclosure, a cell can have at most four neighbors. For boundary nodes, corresponding neighbor nodes are masked. However, it's important to recognize that even with such an approach, a fixed-point iteration would still be necessary to update all cell temperatures simultaneously, which has a similar computation complexity to that of the Backward-Euler scheme. In contrast, PI-GNN consistently predicts thermal states for different cell configurations with a maximum error below 1%. Because all cell configurations are part of the same training, the training time remains constant (dashed line) for PI-GNN. The training takes approximately 22 hours. All models are trained on a state in the art processor.

### Evaluation of the method of the present disclosure:

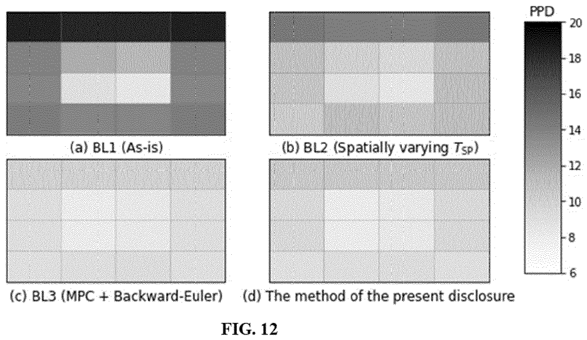

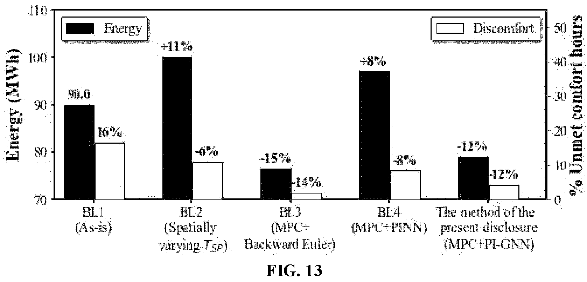

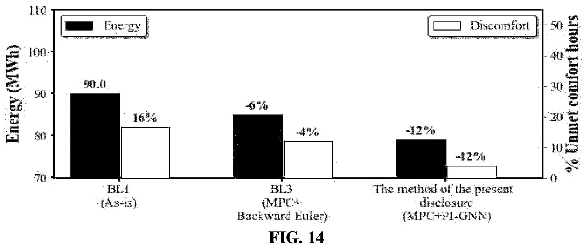

A. **The method of the present disclosure vs Baselines.** FIG. 12 depicts graphical representation illustrating snapshot of spatial PPD variations, in accordance with some embodiments of the present disclosure. In FIG. 12, an instantaneous PPD heat map is presented. For BL1 (with a fixed *T_{SP}* = 24 °*C*), the PPD surpasses acceptable threshold of 10% in perimeter cells and those adjacent to windows (PDD > 20%). While PPD in core cells remains within acceptable limits. In the case of BL2 (*T_{SP} =* 22 °*C* in perimeter cells and *T_{SP}* = 24 °*C* in core cells), thermal comfort improves, but PPD values near the cells are still elevated (10%- 15%), attributed to air-mixing across cells due to non-uniform air temperature. Despite *T_{SP}* being set at 22oC in perimeter cells, the actual temperature settles between 22 °*C* and22 °*C* (not shown here). Optimal control strategies (BL3 and the method of the present disclosure) exhibit similar PPD cell variations, maintaining PPD values within acceptable limits (PPD ≤ 10%) across all cells. This underscores the importance of explicitly considering MRT in control. FIG. 13 depicts graphical representation illustrating a comparison between the control performance of the method of the present disclosure with the baselines, in accordance with some embodiments of the present disclosure. As shown in FIG. 13, the numerals on top of the bar chart for BL1 indicate the raw energy consumption in MWh and the percentage of unmet comfort hours. For BL2 through the method of the present disclosure, the numerals indicate percentage relative changes for energy and percentage point changes for the percentage unmet comfort hours when compared to BL1. The as-is control (BL1) uses a fixed setpoint of *T_{SP}* = 24 ± 1 °*C* throughout the HVAC operation and consumes approximately 90.1 MWh of annual energy with 16% annual unmet comfort hours (that is, for 16% of the year the PPD > 10%). BL2 uses a spatially varying setpoint strategy, that is, *T_{SP}* = 24 ± 1 °*C* for the core cells and *T_{SP} =* 22 ± 1 °*C* for the perimeter cells. While BL2 reduces the percentage unmet comfort hours by a marginal 6%, it consumes 11% more energy over BL1 due to using a lower setpoint for perimeter cells. The MPC with Backward-Euler scheme for solving the ODEs (BL3) achieves the maximum possible energy reduction (15%) while reducing unmet comfort hours to 14% compared with BL1. In BL4, the thermal model of MPC is represented by the regular PINN. PINN performed poorly in predicting the thermal states. While BL4 reduced the percentage unmet comfort hours by 8% compared to BL1, it consumed 8% more energy. Finally, the method of the present disclosure outperforms all other baselines except BL3 in reducing energy and unmet comfort hours. The method of the present disclosure reduced energy by 12% and percentage unmet comfort hours by 12% over BL1. The method of the present disclosure's unmet comfort hours are comparable to BL3, albeit by consuming 3% more energy than BL3. This shows that PI-GNN can help to improve control optimisation by improved thermal model performance.
B. **The method of the present disclosure vs BL3 (MPC** ± **Backward-Euler):** In BL3, the thermal model solution necessitates inner iterations for simultaneous updates of all cell temperatures using the Backward-Euler scheme. This increases the computation time significantly. The MPC strategy, with a four time-steps prediction horizon, involves 64 decision variables (*T_{SP}*). For Backward-Euler, the computation time per function evaluation is approximately one second. The optimizer, on an average, takes around 5000 function evaluations within the control step to find the optimal solution. This renders the computation time per control time-step impractical for real-time control, as it amounts to one hour and 25 minutes, while the control time-step is 15 minutes. On the other hand, the method of the present disclosure takes only 0.15 seconds for one function evaluation, providing an optimal decision within approximately 12 minutes well within the 15-minute control time-step for real-time control. Limiting the function evaluations to 900 for each control time-step in BL3 such that the optimizer gives a solution within 15 minutes leads to poor performance compared to the method of the present disclosure, as depicted in FIG. 13. FIG. 14 depicts graphical representation illustrating evaluation of the performance of the method of the present disclosure against BL3, in accordance with some embodiments of the present disclosure. The method of the present disclosure outperforms BL3 in real-time control, achieving a 6% energy reduction and an 8% decrease in thermal discomfort as shown in FIG. 14.

The written description describes the subject matter herein to enable any person skilled in the art to make and use the embodiments.

The present disclosure provides optimal HVAC control in open-plan spaces cooled by multiple AC units, aiming to minimize energy consumption while ensuring user comfort. Utilizing a physics-informed graph-neural network (PI-GNN) to model thermal dynamics, superior performance is demonstrated compared to regular PINN, achieving errors < 1% for all thermal parameters. The method of the present disclosure outperformed baselines, reducing energy and discomfort by 12% and 12%, respectively, compared to the as-is control strategy. The present disclosure highlights the unsuitability of model predictive control (MPC) with Backward-Euler for real-time control, as its solution time exceeds t control time-step. The method of the present disclosure, with its fast inference of thermal states, proves more suitable for optimal control.

Computer-readable storage storage means contain program-code means for implementation of one or more steps of the method, when the program runs on a server or mobile device or any suitable programmable device. The hardware device can be any kind of device which can be programmed including e.g. any kind of computer like a server or a personal computer, or the like, or any combination thereof. The device may also include means which could be e.g., hardware means like e.g. an application-specific integrated circuit (ASIC), a field-programmable gate array (FPGA), or a combination of hardware and software means, e.g. an ASIC and an FPGA, or at least one microprocessor and at least one memory with software processing components located therein. Thus, the means can include both hardware means and software means. The method embodiments described herein could be implemented in hardware and software. The device may also include software means. Alternatively, the embodiments may be implemented on different hardware devices, e.g. using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only.

## Claims

1. A processor implemented method, comprising:
obtaining (202), via one or more hardware processors, a time series data pertaining to one or more cooling units in an open-plan space as input, wherein the time series data comprises information on a plurality of exogeneous variables, one or more dependency-based parameters, and an associated control signal;
splitting (204), via the one or more hardware processors, the time series data over a plurality of time slots, wherein time is reset to zero at beginning of each of the plurality of time slots, and the plurality of exogeneous variables, an initial value of the one or more variables and the associated control signal are constants in each of the plurality of time slots;
generating (206), via the one or more hardware processors, a thermal model based on a Physics Informed-Graph Neural Network (PI-GNN) using the time series data split over the plurality of time slots to model one or more thermodynamic interactions occurring in the open-plan space, wherein the thermal model is generated by modelling the open-plan space as a plurality of interconnected cells of the PI-GNN with each interconnected cell serviced by a specific cooling unit from one or more cooling units;
training (208), via the one or more hardware processors, the thermal model by performing a plurality of training steps in each of a plurality of iterations till training converges with a reference data, wherein the plurality of training steps comprising:
inputting a plurality of input features, information on time stamp, the plurality of exogenous variables, the associated control signal, and a current time reset length for each of the plurality of time slots as input to the PI-GNN;
estimating a current thermal state corresponding to each of the plurality of interconnected cells based on a forward pass mechanism of the PI-GNN, wherein the current thermal state forms a part of a set of governing equations;
generating an updated thermal state comprising a plurality of state variables as output, by the PI-GNN, wherein the updated thermal state is fed as one input to a subsequent iteration in the plurality of iterations;
calculating a derivative of the plurality of state variables based on the generated updated thermal state, wherein the calculated derivative of the plurality of state variables forms part of the set of governing conditions; and
training the PI-GNN by defining a physics neural network loss as sum of residuals of the set of governing conditions and an initial condition loss to obtain a trained thermal model;
designing (210), via the one or more hardware processors, a PI-GNN based optimal controller by using the trained thermal model as a state estimator; and
determining in real time (212), via the one or more hardware processors, a plurality of optimal temperature setpoints for the one or more cooling units at each of a plurality of control time-steps for an entire prediction horizon using the PI-GNN based optimal controller, wherein the each of the plurality of control time steps are indicative of a plurality of future thermal states predicted by the trained thermal model.

2. The processor implemented method as claimed in claim 1, wherein each interconnected cell from the plurality of interconnected cells is represented by a node and a thermodynamic interaction between two interconnected cells from the plurality of interconnected cells is represented by an edge of the PI-GNN.

3. The processor implemented method as claimed in claim 1, wherein the plurality of input features comprise one or more node features, one or more edge features and one or more adjacency matrices corresponding to the PI-GNN.

4. The processor implemented method as claimed in claim 1, wherein the plurality of state variables comprise room temperature, humidity, window temperature and wall temperature.

5. The processor implemented method as claimed in claim 1, wherein the plurality of optimal temperature setpoints are used to jointly optimize and control the one or more cooling units in the open-plan space resulting in minimum energy and providing user thermal comfort.

6. A system (100), comprising:
a memory (102) storing instructions;
one or more communication interfaces (106); and
one or more hardware processors (104) coupled to the memory (102) via the one or more communication interfaces (106), wherein the one or more hardware processors (104) are configured by the instructions to:
obtain a time series data pertaining to one or more cooling units in an open-plan space as input, wherein the time series data comprises information on a plurality of exogeneous variables, one or more dependency-based parameters, and an associated control signal;
split the time series data over a plurality of time slots, wherein time is reset to zero at beginning of each of the plurality of time slots, and the plurality of exogeneous variables, an initial value of the one or more variables and the associated control signal are constants in each of the plurality of time slots;
generate a thermal model based on a Physics Informed Graph Neural Network (PI-GNN) using the time series data split over the plurality of time slots to model one or more thermodynamic interactions occurring in the open-plan space, wherein the thermal model is generated by modelling the open-plan space as a plurality of interconnected cells of the PI-GNN with each interconnected cell serviced by a specific cooling unit from one or more cooling units;
train the thermal model by performing a plurality of training steps in each of a plurality of iterations till training converges with a reference data, wherein the plurality of training steps comprising:
inputting, a plurality input features, information on time stamp, the plurality of exogenous variables, the associated control signal, and a current time reset length for each of the plurality of time slots as input to the PI-GNN;
estimating, a current thermal state corresponding to each of the plurality of interconnected cells based on a forward pass mechanism of the PI-GNN, wherein the current thermal state forms a part of a set of governing equations;
generating an updated thermal state comprising a plurality of state variables as output, by the PI-GNN, wherein the updated thermal state is fed as one input to a subsequent iteration in the plurality of iterations;
calculating a derivative of the plurality of state variables based on the generated updated thermal state, wherein the calculated derivative of the plurality of state variables forms part of the set of governing conditions; and
training the PI-GNN by defining a physics neural network loss as sum of residuals of the set of governing conditions and an initial condition loss to obtain a trained thermal model;
design a PI-GNN based optimal controller by using the trained thermal model as a state estimator; and
determine in real time, a plurality of optimal temperature setpoints for the one or more cooling units at each of a plurality of control time-steps for an entire prediction horizon using the PI-GNN based optimal controller, wherein the each of the plurality of control time steps are indicative of a plurality of future thermal states predicted by the trained thermal model.

7. The system as claimed in claim 6, wherein each interconnected cell from the plurality of interconnected cells is represented by a node and a thermodynamic interaction between two interconnected cells from the plurality of interconnected cells is represented by an edge of the PI-GNN.

8. The system as claimed in claim 6, wherein the plurality of input features comprise one or more node features, one or more edge features and one or more adjacency matrices corresponding to the PI-GNN.

9. The system as claimed in claim 6, wherein the plurality of state variables comprise room temperature, humidity, window temperature and wall temperature.

10. The system as claimed in claim 6, wherein the plurality of optimal temperature setpoints are used to jointly optimize and control the one or more cooling units in the open-plan space resulting in minimum energy and providing user thermal comfort.

11. One or more non-transitory machine-readable information storage mediums comprising one or more instructions which when executed by one or more hardware processors cause:
obtaining a time series data pertaining to one or more cooling units in an open-plan space as input, wherein the time series data comprises information on a plurality of exogeneous variables, one or more dependency-based parameters, and an associated control signal;
splitting the time series data over a plurality of time slots, wherein time is reset to zero at beginning of each of the plurality of time slots, and the plurality of exogeneous variables, an initial value of the one or more variables and the associated control signal are constants in each of the plurality of time slots;
generating a thermal model based on a Physics Informed-Graph Neural Network (PI-GNN) using the time series data split over the plurality of time slots to model one or more thermodynamic interactions occurring in the open-plan space, wherein the thermal model is generated by modelling the open-plan space as a plurality of interconnected cells of the PI-GNN with each interconnected cell serviced by a specific cooling unit from one or more cooling units;
training the thermal model by performing a plurality of training steps in each of a plurality of iterations till training converges with a reference data, wherein the plurality of training steps comprising:
inputting a plurality of input features, information on time stamp, the plurality of exogenous variables, the associated control signal, and a current time reset length for each of the plurality of time slots as input to the PI-GNN;
estimating a current thermal state corresponding to each of the plurality of interconnected cells based on a forward pass mechanism of the PI-GNN, wherein the current thermal state forms a part of a set of governing equations;
generating an updated thermal state comprising a plurality of state variables as output, by the PI-GNN, wherein the updated thermal state is fed as one input to a subsequent iteration in the plurality of iterations;
calculating a derivative of the plurality of state variables based on the generated updated thermal state, wherein the calculated derivative of the plurality of state variables forms part of the set of governing conditions; and
training the PI-GNN by defining a physics neural network loss as sum of residuals of the set of governing conditions and an initial condition loss to obtain a trained thermal model;
designing a PI-GNN based optimal controller by using the trained thermal model as a state estimator; and
determining in real time, a plurality of optimal temperature setpoints for the one or more cooling units at each of a plurality of control time-steps for an entire prediction horizon using the PI-GNN based optimal controller, wherein the each of the plurality of control time steps are indicative of a plurality of future thermal states predicted by the trained thermal model.

12. The one or more non-transitory machine-readable information storage mediums as claimed in claim 11, wherein each interconnected cell from the plurality of interconnected cells is represented by a node and a thermodynamic interaction between two interconnected cells from the plurality of interconnected cells is represented by an edge of the PI-GNN.

13. The one or more non-transitory machine-readable information storage mediums as claimed in claim 11, wherein the plurality of input features comprise one or more node features, one or more edge features and one or more adjacency matrices corresponding to the PI-GNN.

14. The one or more non-transitory machine-readable information storage mediums as claimed in claim 11, wherein the plurality of state variables comprise room temperature, humidity, window temperature and wall temperature.

15. The one or more non-transitory machine-readable information storage mediums as claimed in claim 11, wherein the plurality of optimal temperature setpoints are used to jointly optimize and control the one or more cooling units in the open-plan space resulting in minimum energy and providing user thermal comfort.

## Patentansprüche

1. Prozessorimplementiertes Verfahren, umfassend:
Erhalten (202), über einen oder mehrere Hardwareprozessoren, von Zeitreihendaten, die sich auf eine oder mehrere Kühleinheiten in einem offenen Planraum als Eingabe beziehen, wobei die Zeitreihendaten Informationen über eine Mehrzahl von exogenen Variablen, einen oder mehrere abhängigkeitsbasierte Parameter und ein zugehöriges Steuersignal umfassen;
Aufteilen (204), über den einen oder die mehreren Hardwareprozessoren, der Zeitreihendaten über eine Mehrzahl von Zeitschlitzen, wobei die Zeit zu Beginn jedes der Mehrzahl von Zeitschlitzen auf null zurückgesetzt wird und die Mehrzahl von exogenen Variablen, ein Anfangswert der einen oder mehreren Variablen und das zugehörige Steuersignal Konstanten in jedem der Mehrzahl von Zeitschlitzen sind;
Erzeugen (206), über den einen oder die mehreren Hardwareprozessoren, eines thermischen Modells, das auf einem physikalischen Informationsgraph-Neuronalnetzwerk (PI-GNN) basiert, unter Verwendung der Zeitreihendaten, die über die Mehrzahl von Zeitschlitzen aufgeteilt werden, um eine oder mehrere thermodynamische Wechselwirkungen zu modellieren, die in dem offenen Planraum auftreten, wobei das thermische Modell durch Modellieren des offenen Planraums als eine Mehrzahl von miteinander verbundenen Zellen des PI-GNN erzeugt wird, wobei jede miteinander verbundene Zelle durch eine spezifische Kühleinheit von einer oder mehreren Kühleinheiten bedient wird;
Trainieren (208), über den einen oder die mehreren Hardwareprozessoren, des thermischen Modells durch Durchführen einer Mehrzahl von Trainingsschritten in jeder einer Mehrzahl von Iterationen, bis das Training mit Referenzdaten konvergiert, wobei die Mehrzahl von Trainingsschritten umfasst:
Eingeben einer Mehrzahl von Eingabemerkmalen, von Informationen über einen Zeitstempel, der Mehrzahl von exogenen Variablen, des zugehörigen Steuersignals und einer aktuellen Zeitrücksetzlänge für jeden der Mehrzahl von Zeitschlitzen als Eingabe in das PI-GNN;
Schätzen eines aktuellen thermischen Zustands, der jeder der Mehrzahl von miteinander verbundenen Zellen entspricht, basierend auf einem Vorwärtsdurchgangsmechanismus des PI-GNN, wobei der aktuelle thermische Zustand einen Teil eines Satzes von Regelungsgleichungen bildet;
Erzeugen eines aktualisierten thermischen Zustands, der eine Mehrzahl von Zustandsvariablen als Ausgabe umfasst, durch das PI-GNN, wobei der aktualisierte thermische Zustand als eine Eingabe in eine nachfolgende Iteration in der Mehrzahl von Iterationen eingespeist wird;
Berechnen einer Ableitung der Mehrzahl von Zustandsvariablen basierend auf dem erzeugten aktualisierten thermischen Zustand, wobei die berechnete Ableitung der Mehrzahl von Zustandsvariablen einen Teil des Satzes von Regelungsbedingungen bildet; und
Trainieren des PI-GNN durch Definieren eines Verlusts eines physikalischen neuronalen Netzwerks als Summe von Resten des Satzes von Regelungsbedingungen und eines anfänglichen Bedingungsverlusts, um ein trainiertes thermisches Modell zu erhalten;
Entwerfen (210), über den einen oder die mehreren Hardwareprozessoren, einer PI-GNN-basierten optimalen Steuerung durch Verwenden des trainierten thermischen Modells als einen Zustandsschätzer; und
Bestimmen in Echtzeit (212), über den einen oder die mehreren Hardwareprozessoren, einer Mehrzahl von optimalen Temperatursollwerten für die eine oder die mehreren Kühleinheiten bei jedem einer Mehrzahl von Steuerzeitschritten für einen gesamten Vorhersagehorizont unter Verwendung der PI-GNN-basierten optimalen Steuerung, wobei jeder der Mehrzahl von Steuerzeitschritten eine Mehrzahl von zukünftigen thermischen Zuständen angibt, die durch das trainierte thermische Modell vorhergesagt werden.

2. Prozessorimplementiertes Verfahren nach Anspruch 1, wobei jede verbundene Zelle aus der Mehrzahl von verbundenen Zellen durch einen Knoten dargestellt wird und eine thermodynamische Wechselwirkung zwischen zwei verbundenen Zellen aus der Mehrzahl von verbundenen Zellen durch eine Kante des PI-GNN dargestellt wird.

3. Prozessorimplementiertes Verfahren nach Anspruch 1, wobei die Mehrzahl von Eingabemerkmalen ein oder mehrere Knotenmerkmale, ein oder mehrere Kantenmerkmale und eine oder mehrere Nachbarschaftsmatrizen, die dem PI-GNN entsprechen, umfasst.

4. Prozessorimplementiertes Verfahren nach Anspruch 1, wobei die Mehrzahl von Zustandsvariablen Raumtemperatur, Feuchtigkeit, Fenstertemperatur und Wandtemperatur umfasst.

5. Prozessorimplementiertes Verfahren nach Anspruch 1, wobei die Mehrzahl von optimalen Temperatursollwerten verwendet wird, um die eine oder die mehreren Kühleinheiten in dem offenen Planraum gemeinsam zu optimieren und zu steuern, was zu minimaler Energie führt und thermischen Benutzerkomfort bereitstellt.

6. System (100), umfassend:
einen Speicher (102), der Anweisungen speichert;
eine oder mehrere Kommunikationsschnittstellen (106); und
einen oder mehrere Hardwareprozessoren (104), die über die eine oder die mehreren Kommunikationsschnittstellen (106) mit dem Speicher (102) gekoppelt sind, wobei der eine oder die mehreren Hardwareprozessoren (104) durch die Anweisungen konfiguriert sind zum:
Erhalten von Zeitreihendaten, die sich auf eine oder mehrere Kühleinheiten in einem offenen Planraum als Eingabe beziehen, wobei die Zeitreihendaten Informationen über eine Mehrzahl von exogenen Variablen, einen oder mehrere abhängigkeitsbasierte Parameter und ein zugehöriges Steuersignal umfassen;
Aufteilen der Zeitreihendaten über eine Mehrzahl von Zeitschlitzen, wobei die Zeit zu Beginn jedes der Mehrzahl von Zeitschlitzen auf null zurückgesetzt wird und die Mehrzahl von exogenen Variablen, ein Anfangswert der einen oder mehreren Variablen und das zugehörige Steuersignal Konstanten in jedem der Mehrzahl von Zeitschlitzen sind;
Erzeugen eines thermischen Modells, das auf einem physikalischen Informationsgraph-Neuronalnetzwerk (PI-GNN) basiert, unter Verwendung der Zeitreihendaten, die über die Mehrzahl von Zeitschlitzen aufgeteilt werden, um eine oder mehrere thermodynamische Wechselwirkungen zu modellieren, die in dem offenen Planraum auftreten, wobei das thermische Modell durch Modellieren des offenen Planraums als eine Mehrzahl von miteinander verbundenen Zellen des PI-GNN erzeugt wird, wobei jede miteinander verbundene Zelle durch eine spezifische Kühleinheit von einer oder mehreren Kühleinheiten bedient wird;
Trainieren des thermischen Modells durch Durchführen einer Mehrzahl von Trainingsschritten in jeder einer Mehrzahl von Iterationen, bis das Training mit Referenzdaten konvergiert, wobei die Mehrzahl von Trainingsschritten umfasst:
Eingeben einer Mehrzahl von Eingabemerkmalen, von Informationen über einen Zeitstempel, der Mehrzahl von exogenen Variablen, des zugehörigen Steuersignals und einer aktuellen Zeitrücksetzlänge für jeden der Mehrzahl von Zeitschlitzen als Eingabe in das PI-GNN;
Schätzen eines aktuellen thermischen Zustands, der jeder der Mehrzahl von miteinander verbundenen Zellen entspricht, basierend auf einem Vorwärtsdurchgangsmechanismus des PI-GNN, wobei der aktuelle thermische Zustand einen Teil eines Satzes von Regelungsgleichungen bildet;
Erzeugen eines aktualisierten thermischen Zustands, der eine Mehrzahl von Zustandsvariablen als Ausgabe umfasst, durch das PI-GNN, wobei der aktualisierte thermische Zustand als eine Eingabe in eine nachfolgende Iteration in der Mehrzahl von Iterationen eingespeist wird;
Berechnen einer Ableitung der Mehrzahl von Zustandsvariablen basierend auf dem erzeugten aktualisierten thermischen Zustand, wobei die berechnete Ableitung der Mehrzahl von Zustandsvariablen einen Teil des Satzes von Regelungsbedingungen bildet; und
Trainieren des PI-GNN durch Definieren eines Verlusts eines physikalischen neuronalen Netzwerks als Summe von Resten des Satzes von Regelungsbedingungen und eines anfänglichen Bedingungsverlusts, um ein trainiertes thermisches Modell zu erhalten;
Entwerfen einer PI-GNN-basierten optimalen Steuerung durch Verwenden des trainierten thermischen Modells als einen Zustandsschätzer; und
Bestimmen in Echtzeit einer Mehrzahl von optimalen Temperatursollwerten für die eine oder die mehreren Kühleinheiten bei jedem einer Mehrzahl von Steuerzeitschritten für einen gesamten Vorhersagehorizont unter Verwendung der PI-GNN-basierten optimalen Steuerung, wobei jeder der Mehrzahl von Steuerzeitschritten eine Mehrzahl von zukünftigen thermischen Zuständen angibt, die durch das trainierte thermische Modell vorhergesagt werden.

7. System nach Anspruch 6, wobei jede verbundene Zelle aus der Mehrzahl von verbundenen Zellen durch einen Knoten dargestellt wird und eine thermodynamische Wechselwirkung zwischen zwei verbundenen Zellen aus der Mehrzahl von verbundenen Zellen durch eine Kante des PI-GNN dargestellt wird.

8. System nach Anspruch 6, wobei die Mehrzahl von Eingabemerkmalen ein oder mehrere Knotenmerkmale, ein oder mehrere Kantenmerkmale und eine oder mehrere Nachbarschaftsmatrizen, die dem PI-GNN entsprechen, umfasst.

9. System nach Anspruch 6, wobei die Mehrzahl von Zustandsvariablen Raumtemperatur, Feuchtigkeit, Fenstertemperatur und Wandtemperatur umfasst.

10. System nach Anspruch 6, wobei die Mehrzahl von optimalen Temperatursollwerten verwendet wird, um die eine oder die mehreren Kühleinheiten in dem offenen Planraum gemeinsam zu optimieren und zu steuern, was zu minimaler Energie führt und thermischen Benutzerkomfort bereitstellt.

11. Ein oder mehrere nichtflüchtige maschinenlesbare Informationsspeichermedien, die eine oder mehrere Anweisungen umfassen, die bei Ausführung durch einen oder mehrere Hardwareprozessoren bewirken:
Erhalten von Zeitreihendaten, die sich auf eine oder mehrere Kühleinheiten in einem offenen Planraum als Eingabe beziehen, wobei die Zeitreihendaten Informationen über eine Mehrzahl von exogenen Variablen, einen oder mehrere abhängigkeitsbasierte Parameter und ein zugehöriges Steuersignal umfassen;
Aufteilen der Zeitreihendaten über eine Mehrzahl von Zeitschlitzen, wobei die Zeit zu Beginn jedes der Mehrzahl von Zeitschlitzen auf null zurückgesetzt wird und die Mehrzahl von exogenen Variablen, ein Anfangswert der einen oder mehreren Variablen und das zugehörige Steuersignal Konstanten in jedem der Mehrzahl von Zeitschlitzen sind;
Erzeugen eines thermischen Modells, das auf einem physikalischen Informationsgraph-Neuronalnetzwerk (PI-GNN) basiert, unter Verwendung der Zeitreihendaten, die über die Mehrzahl von Zeitschlitzen aufgeteilt werden, um eine oder mehrere thermodynamische Wechselwirkungen zu modellieren, die in dem offenen Planraum auftreten, wobei das thermische Modell durch Modellieren des offenen Planraums als eine Mehrzahl von miteinander verbundenen Zellen des PI-GNN erzeugt wird, wobei jede miteinander verbundene Zelle durch eine spezifische Kühleinheit von einer oder mehreren Kühleinheiten bedient wird;
Trainieren des thermischen Modells durch Durchführen einer Mehrzahl von Trainingsschritten in jeder einer Mehrzahl von Iterationen, bis das Training mit Referenzdaten konvergiert, wobei die Mehrzahl von Trainingsschritten umfasst:
Eingeben einer Mehrzahl von Eingabemerkmalen, von Informationen über einen Zeitstempel, der Mehrzahl von exogenen Variablen, des zugehörigen Steuersignals und einer aktuellen Zeitrücksetzlänge für jeden der Mehrzahl von Zeitschlitzen als Eingabe in das PI-GNN;
Schätzen eines aktuellen thermischen Zustands, der jeder der Mehrzahl von miteinander verbundenen Zellen entspricht, basierend auf einem Vorwärtsdurchgangsmechanismus des PI-GNN, wobei der aktuelle thermische Zustand einen Teil eines Satzes von Regelungsgleichungen bildet;
Erzeugen eines aktualisierten thermischen Zustands, der eine Mehrzahl von Zustandsvariablen als Ausgabe umfasst, durch das PI-GNN, wobei der aktualisierte thermische Zustand als eine Eingabe in eine nachfolgende Iteration in der Mehrzahl von Iterationen eingespeist wird;
Berechnen einer Ableitung der Mehrzahl von Zustandsvariablen basierend auf dem erzeugten aktualisierten thermischen Zustand, wobei die berechnete Ableitung der Mehrzahl von Zustandsvariablen einen Teil des Satzes von Regelungsbedingungen bildet; und
Trainieren des PI-GNN durch Definieren eines Verlusts eines physikalischen neuronalen Netzwerks als Summe von Resten des Satzes von Regelungsbedingungen und eines anfänglichen Bedingungsverlusts, um ein trainiertes thermisches Modell zu erhalten;
Entwerfen einer PI-GNN-basierten optimalen Steuerung durch Verwenden des trainierten thermischen Modells als einen Zustandsschätzer; und
Bestimmen in Echtzeit einer Mehrzahl von optimalen Temperatursollwerten für die eine oder die mehreren Kühleinheiten bei jedem einer Mehrzahl von Steuerzeitschritten für einen gesamten Vorhersagehorizont unter Verwendung der PI-GNN-basierten optimalen Steuerung, wobei jeder der Mehrzahl von Steuerzeitschritten eine Mehrzahl von zukünftigen thermischen Zuständen angibt, die durch das trainierte thermische Modell vorhergesagt werden.

12. Ein oder mehrere nichtflüchtige maschinenlesbare Informationsspeichermedien nach Anspruch 11, wobei jede verbundene Zelle aus der Mehrzahl von verbundenen Zellen durch einen Knoten dargestellt wird und eine thermodynamische Wechselwirkung zwischen zwei verbundenen Zellen aus der Mehrzahl von verbundenen Zellen durch eine Kante des PI-GNN dargestellt wird.

13. Ein oder mehrere nichtflüchtige maschinenlesbare Informationsspeichermedien nach Anspruch 11, wobei die Mehrzahl von Eingabemerkmalen ein oder mehrere Knotenmerkmale, ein oder mehrere Kantenmerkmale und eine oder mehrere Nachbarschaftsmatrizen, die dem PI-GNN entsprechen, umfasst.

14. Ein oder mehrere nichtflüchtige maschinenlesbare Informationsspeichermedien nach Anspruch 11, wobei die Mehrzahl von Zustandsvariablen Raumtemperatur, Feuchtigkeit, Fenstertemperatur und Wandtemperatur umfasst.

15. Ein oder mehrere nichtflüchtige maschinenlesbare Informationsspeichermedien nach Anspruch 11, wobei die Mehrzahl von optimalen Temperatursollwerten verwendet wird, um die eine oder die mehreren Kühleinheiten in dem offenen Planraum gemeinsam zu optimieren und zu steuern, was zu minimaler Energie führt und thermischen Benutzerkomfort bereitstellt.

## Revendications

1. Procédé mis en oeuvre par processeur, comprenant :
l'obtention (202), via un ou plusieurs processeurs matériels, de données de série temporelle relatives à une ou plusieurs unités de refroidissement dans un espace de plan ouvert en tant qu'entrée, dans lequel les données de série temporelle comprennent des informations sur une pluralité de variables exogènes, un ou plusieurs paramètres basés sur la dépendance, et un signal de commande associé ;
la division (204), via les un ou plusieurs processeurs matériels, des données de série temporelle sur une pluralité d'intervalles de temps, dans lequel le temps est remis à zéro au début de chacun de la pluralité d'intervalles de temps, et la pluralité de variables exogènes, une valeur initiale des une ou plusieurs variables et le signal de commande associé sont des constantes dans chacun de la pluralité d'intervalles de temps ;
la génération (206), via les un ou plusieurs processeurs matériels, d'un modèle thermique basé sur un réseau neuronal de graphe informé par la physique (PI-GNN) en utilisant les données de série temporelle divisées sur la pluralité d'intervalles de temps pour modéliser une ou plusieurs interactions thermodynamiques se produisant dans l'espace de plan ouvert, dans lequel le modèle thermique est généré en modélisant l'espace de plan ouvert comme une pluralité de cellules interconnectées du PI-GNN avec chaque cellule interconnectée desservie par une unité de refroidissement spécifique à partir d'une ou plusieurs unités de refroidissement ;
l'apprentissage (208), via les un ou plusieurs processeurs matériels, du modèle thermique en effectuant une pluralité d'étapes d'apprentissage dans chacune d'une pluralité d'itérations jusqu'à ce que l'apprentissage converge avec des données de référence, dans lequel la pluralité d'étapes d'apprentissage comprend :
l'entrée d'une pluralité de caractéristiques d'entrée, d'informations sur une estampille temporelle, de la pluralité de variables exogènes, du signal de commande associé, et d'une longueur de remise à zéro de temps actuelle pour chacun de la pluralité d'intervalles de temps en tant qu'entrée dans le PI-GNN ;
l'estimation d'un état thermique actuel correspondant à chacun de la pluralité de cellules interconnectées sur la base d'un mécanisme de passage avant du PI-GNN, dans lequel l'état thermique actuel fait partie d'un ensemble d'équations gouvernantes ;
la génération d'un état thermique mis à jour comprenant une pluralité de variables d'état en tant que sortie, par le PI-GNN, dans lequel l'état thermique mis à jour est fourni en tant qu'entrée à une itération suivante dans la pluralité d'itérations ;
le calcul d'une dérivée de la pluralité de variables d'état sur la base de l'état thermique mis à jour généré, dans lequel la dérivée calculée de la pluralité de variables d'état fait partie de l'ensemble de conditions gouvernantes ; et
l'apprentissage du PI-GNN en définissant une perte de réseau neuronal physique en tant que somme de résidus de l'ensemble de conditions gouvernantes et d'une perte de condition initiale pour obtenir un modèle thermique entraîné ;
la conception (210), via les un ou plusieurs processeurs matériels, d'un contrôleur optimal basé sur PI-GNN en utilisant le modèle thermique entraîné en tant qu'estimateur d'état ; et
la détermination en temps réel (212), via les un ou plusieurs processeurs matériels, d'une pluralité de points de consigne de température optimale pour les une ou plusieurs unités de refroidissement à chacune d'une pluralité d'étapes de temps de commande pour un horizon de prédiction entier en utilisant le contrôleur optimal basé sur PI-GNN, dans lequel chacune de la pluralité d'étapes de temps de commande est indicative d'une pluralité d'états thermiques futurs prédits par le modèle thermique entraîné.

2. Procédé mis en oeuvre par processeur selon la revendication 1, dans lequel chaque cellule interconnectée de la pluralité de cellules interconnectées est représentée par un nœud et une interaction thermodynamique entre deux cellules interconnectées de la pluralité de cellules interconnectées est représentée par une arête du PI-GNN.

3. Procédé mis en oeuvre par processeur selon la revendication 1, dans lequel la pluralité de caractéristiques d'entrée comprend une ou plusieurs caractéristiques de nœud, une ou plusieurs caractéristiques d'arête et une ou plusieurs matrices d'adjacence correspondant au PI-GNN.

4. Procédé mis en oeuvre par processeur selon la revendication 1, dans lequel la pluralité de variables d'état comprend la température ambiante, l'humidité, la température de fenêtre et la température de paroi.

5. Procédé mis en oeuvre par processeur selon la revendication 1, dans lequel la pluralité de points de consigne de température optimale sont utilisés pour optimiser et commander conjointement les une ou plusieurs unités de refroidissement dans l'espace de plan ouvert entraînant une consommation d'énergie minimale et assurant le confort thermique de l'utilisateur.

6. Système (100), comprenant :
une mémoire (102) stockant des instructions ;
une ou plusieurs interfaces de communication (106) ; et
un ou plusieurs processeurs matériels (104) couplés à la mémoire (102) via les une ou plusieurs interfaces de communication (106), dans lequel les un ou plusieurs processeurs matériels (104) sont configurés par les instructions pour
obtenir des données de série temporelle relatives à une ou plusieurs unités de refroidissement dans un espace de plan ouvert en tant qu'entrée, dans lequel les données de série temporelle comprennent des informations sur une pluralité de variables exogènes, un ou plusieurs paramètres basés sur la dépendance, et un signal de commande associé ;
diviser les données de série temporelle sur une pluralité d'intervalles de temps, dans lequel le temps est remis à zéro au début de chacun de la pluralité d'intervalles de temps, et la pluralité de variables exogènes, une valeur initiale des une ou plusieurs variables et le signal de commande associé sont des constantes dans chacun de la pluralité d'intervalles de temps ;
générer un modèle thermique basé sur un réseau neuronal de graphe informé par la physique (PI-GNN) en utilisant les données de série temporelle divisées sur la pluralité d'intervalles de temps pour modéliser une ou plusieurs interactions thermodynamiques se produisant dans l'espace de plan ouvert, dans lequel le modèle thermique est généré en modélisant l'espace de plan ouvert comme une pluralité de cellules interconnectées du PI-GNN avec chaque cellule interconnectée desservie par une unité de refroidissement spécifique à partir d'une ou plusieurs unités de refroidissement ;
apprendre le modèle thermique en effectuant une pluralité d'étapes d'apprentissage dans chacune d'une pluralité d'itérations jusqu'à ce que l'apprentissage converge avec des données de référence, dans lequel la pluralité d'étapes d'apprentissage comprend :
l'entrée d'une pluralité de caractéristiques d'entrée, d'informations sur une estampille temporelle, de la pluralité de variables exogènes, du signal de commande associé, et d'une longueur de remise à zéro de temps actuelle pour chacun de la pluralité d'intervalles de temps en tant qu'entrée dans le PI-GNN ;
l'estimation d'un état thermique actuel correspondant à chacun de la pluralité de cellules interconnectées sur la base d'un mécanisme de passage avant du PI-GNN, dans lequel l'état thermique actuel fait partie d'un ensemble d'équations gouvernantes ;
la génération d'un état thermique mis à jour comprenant une pluralité de variables d'état en tant que sortie, par le PI-GNN, dans lequel l'état thermique mis à jour est fourni en tant qu'entrée à une itération suivante dans la pluralité d'itérations ;
le calcul d'une dérivée de la pluralité de variables d'état sur la base de l'état thermique mis à jour généré, dans lequel la dérivée calculée de la pluralité de variables d'état fait partie de l'ensemble de conditions gouvernantes ; et
l'apprentissage du PI-GNN en définissant une perte de réseau neuronal physique en tant que somme de résidus de l'ensemble de conditions gouvernantes et d'une perte de condition initiale pour obtenir un modèle thermique entraîné ;
la conception d'un contrôleur optimal basé sur PI-GNN en utilisant le modèle thermique entraîné en tant qu'estimateur d'état ; et
la détermination en temps réel, d'une pluralité de points de consigne de température optimale pour les une ou plusieurs unités de refroidissement à chacune d'une pluralité d'étapes de temps de commande pour un horizon de prédiction entier en utilisant le contrôleur optimal basé sur PI-GNN, dans lequel chacune de la pluralité d'étapes de temps de commande est indicative d'une pluralité d'états thermiques futurs prédits par le modèle thermique entraîné.

7. Système selon la revendication 6, dans lequel chaque cellule interconnectée de la pluralité de cellules interconnectées est représentée par un nœud et une interaction thermodynamique entre deux cellules interconnectées de la pluralité de cellules interconnectées est représentée par une arête du PI-GNN.

8. Système selon la revendication 6, dans lequel la pluralité de caractéristiques d'entrée comprend une ou plusieurs caractéristiques de nœud, une ou plusieurs caractéristiques d'arête et une ou plusieurs matrices d'adjacence correspondant au PI-GNN.

9. Système selon la revendication 6, dans lequel la pluralité de variables d'état comprend la température ambiante, l'humidité, la température de fenêtre et la température de paroi.

10. Système selon la revendication 6, dans lequel la pluralité de points de consigne de température optimale sont utilisés pour optimiser et commander conjointement les une ou plusieurs unités de refroidissement dans l'espace de plan ouvert entraînant une consommation d'énergie minimale et assurant le confort thermique de l'utilisateur.

11. Un ou plusieurs supports de stockage d'informations lisibles par machine non transitoires comprenant une ou plusieurs instructions qui, lorsqu'elles sont exécutées par un ou plusieurs processeurs matériels, amènent :
l'obtention de données de série temporelle relatives à une ou plusieurs unités de refroidissement dans un espace de plan ouvert en tant qu'entrée, dans lequel les données de série temporelle comprennent des informations sur une pluralité de variables exogènes, un ou plusieurs paramètres basés sur la dépendance, et un signal de commande associé ;
la division des données de série temporelle sur une pluralité d'intervalles de temps, dans lequel le temps est remis à zéro au début de chacun de la pluralité d'intervalles de temps, et la pluralité de variables exogènes, une valeur initiale des une ou plusieurs variables et le signal de commande associé sont des constantes dans chacun de la pluralité d'intervalles de temps ;
la génération d'un modèle thermique basé sur un réseau neuronal de graphe informé par la physique (PI-GNN) en utilisant les données de série temporelle divisées sur la pluralité d'intervalles de temps pour modéliser une ou plusieurs interactions thermodynamiques se produisant dans l'espace de plan ouvert, dans lequel le modèle thermique est généré en modélisant l'espace de plan ouvert comme une pluralité de cellules interconnectées du PI-GNN avec chaque cellule interconnectée desservie par une unité de refroidissement spécifique à partir d'une ou plusieurs unités de refroidissement ;
l'apprentissage du modèle thermique en effectuant une pluralité d'étapes d'apprentissage dans chacune d'une pluralité d'itérations jusqu'à ce que l'apprentissage converge avec des données de référence, dans lequel la pluralité d'étapes d'apprentissage comprend :
l'entrée d'une pluralité de caractéristiques d'entrée, d'informations sur une estampille temporelle, de la pluralité de variables exogènes, du signal de commande associé, et d'une longueur de remise à zéro de temps actuelle pour chacun de la pluralité d'intervalles de temps en tant qu'entrée dans le PI-GNN ;
l'estimation d'un état thermique actuel correspondant à chacun de la pluralité de cellules interconnectées sur la base d'un mécanisme de passage avant du PI-GNN, dans lequel l'état thermique actuel fait partie d'un ensemble d'équations gouvernantes ;
la génération d'un état thermique mis à jour comprenant une pluralité de variables d'état en tant que sortie, par le PI-GNN, dans lequel l'état thermique mis à jour est fourni en tant qu'entrée à une itération suivante dans la pluralité d'itérations ;
le calcul d'une dérivée de la pluralité de variables d'état sur la base de l'état thermique mis à jour généré, dans lequel la dérivée calculée de la pluralité de variables d'état fait partie de l'ensemble de conditions gouvernantes ; et
l'apprentissage du PI-GNN en définissant une perte de réseau neuronal physique en tant que somme de résidus de l'ensemble de conditions gouvernantes et d'une perte de condition initiale pour obtenir un modèle thermique entraîné ;
la conception d'un contrôleur optimal basé sur PI-GNN en utilisant le modèle thermique entraîné en tant qu'estimateur d'état ; et
la détermination en temps réel, d'une pluralité de points de consigne de température optimale pour les une ou plusieurs unités de refroidissement à chacune d'une pluralité d'étapes de temps de commande pour un horizon de prédiction entier en utilisant le contrôleur optimal basé sur PI-GNN, dans lequel chacune de la pluralité d'étapes de temps de commande est indicative d'une pluralité d'états thermiques futurs prédits par le modèle thermique entraîné.

12. Un ou plusieurs supports de stockage d'informations lisibles par machine non transitoires selon la revendication 11, dans lequel chaque cellule interconnectée de la pluralité de cellules interconnectées est représentée par un nœud et une interaction thermodynamique entre deux cellules interconnectées de la pluralité de cellules interconnectées est représentée par une arête du PI-GNN.

13. Un ou plusieurs supports de stockage d'informations lisibles par machine non transitoires selon la revendication 11, dans lequel la pluralité de caractéristiques d'entrée comprend une ou plusieurs caractéristiques de nœud, une ou plusieurs caractéristiques d'arête et une ou plusieurs matrices d'adjacence correspondant au PI-GNN.

14. Un ou plusieurs supports de stockage d'informations lisibles par machine non transitoires selon la revendication 11, dans lequel la pluralité de variables d'état comprend la température ambiante, l'humidité, la température de fenêtre et la température de paroi.

15. Un ou plusieurs supports de stockage d'informations lisibles par machine non transitoires selon la revendication 11, dans lequel la pluralité de points de consigne de température optimale sont utilisés pour optimiser et commander conjointement les une ou plusieurs unités de refroidissement dans l'espace de plan ouvert entraînant une consommation d'énergie minimale et assurant le confort thermique de l'utilisateur.
